(19) **Europäisches Patentamt / European Patent Office / Office européen des brevets**

(11) **EP 4 518 542 A1**

(12) **EUROPEAN PATENT APPLICATION**
published in accordance with Art. 153(4) EPC

(43) Date of publication:
**05.03.2025 Bulletin 2025/10**

(21) Application number: **23796829.2**

(22) Date of filing: **27.04.2023**

(51) International Patent Classification (IPC):
**H04W 72/566** (2023.01)     **H04W 72/12** (2023.01)
**H04W 72/21** (2023.01)     **H04W 72/23** (2023.01)
**H04L 5/00** (2006.01)     **H04L 1/18** (2023.01)

(52) Cooperative Patent Classification (CPC):
**H04L 1/18; H04L 5/00; H04W 72/12; H04W 72/21; H04W 72/23; H04W 72/566**

(86) International application number:
**PCT/KR2023/005761**

(87) International publication number:
**WO 2023/211187 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 KR 20220053051**

(71) Applicant: **LG Electronics Inc.**
**Yeongdeungpo-gu**
**Seoul 07336 (KR)**

(72) Inventors:
- **BAE, Duckhyun**
  **Seoul 06772 (KR)**
- **YANG, Suckchel**
  **Seoul 06772 (KR)**
- **KIM, Jaehyung**
  **Seoul 06772 (KR)**

(74) Representative: **Plasseraud IP**
**104 Rue de Richelieu**
**CS92104**
**75080 Paris Cedex 02 (FR)**

(54) **METHOD, USER DEVICE, PROCESSING DEVICE, AND STORAGE MEDIUM FOR UPLINK SIGNAL TRANSMISSION, AND METHOD AND BASE STATION FOR UPLINK SIGNAL RECEPTION**

(57)     A UE may: receive a DCI format for scheduling of a first uplink transmission on a cell, wherein the first uplink transmission has a third priority which is not related to a first priority index indicating a low priority and a second priority index indicating a high priority; determine a slot for the first uplink transmission on the basis of the DCI format; and on the basis of the first uplink transmission overlapping in time with a second uplink transmission related to the first priority index or the second priority index in the slot, multiplex the first uplink transmission on a first uplink channel by considering that the priority of the first uplink transmission is the same as the priority of the second uplink transmission.

**FIG. 8**

Receive DCI format scheduling first UL transmission related to third priority — S801

Determine slot for first UL transmission — S803

Multiplex first UL transmission onto first UL channel based on first UL transmission and UL transmission that overlaps in time with first UL transmission and has priority different from third priority — S805

Transmit first UL channel in slot — S807

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

#### Technical Problem

As new radio communication technology has been introduced, the number of UEs to which a BS should provide services in a prescribed resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

A method to efficiently support various services with different requirements in a wireless communication system is also needed.

Overcoming delay or latency is an important challenge to applications, performance of which is sensitive to delay/latency.

Further, a method of efficiently transmitting data packets in which jitter may occur in a wireless communication system is needed.

The objects to be achieved with the present disclosure are not limited to what has been particularly described hereinabove and other objects not described herein will be more clearly understood by persons skilled in the art from the following detailed description.

#### Technical Solution

In an aspect of the present disclosure, provided herein is a method of transmitting an uplink signal by a user equipment (UE) in a wireless communication system. The method includes: receiving a downlink control information (DCI) format scheduling first uplink transmission on a cell, wherein the first uplink transmission has a third priority that is not related to a first priority index indicating a low priority or a second priority index indicating a high priority; determining a slot for the first uplink transmission based on the DCI format; based on the first uplink transmission overlapping in time with second uplink transmission related to the first priority index or the second priority index within the slot, multiplexing the first uplink transmission onto a first uplink channel by considering that a priority of the first uplink transmission is equal to a priority of the second uplink transmission; and transmitting the first uplink channel in the slot.

In another aspect of the present disclosure, provided herein is a UE configured to transmit an uplink signal in a wireless communication system. The UE includes: at least one transceiver; at least one processor; and at least one computer memory operably connected to the at least one processor and storing instructions that, when executed, cause the at least one processor to perform operations. The operations include: receiving a DCI format scheduling first uplink transmission on a cell, wherein the first uplink transmission has a third priority that is not related to a first priority index indicating a low priority or a second priority index indicating a high priority; determining a slot for the first uplink transmission based on the DCI format; based on the first uplink transmission overlapping in time with second uplink transmission related to the first priority index or the second priority index within the slot, multiplexing the first uplink transmission onto a first uplink channel by considering that a priority of the first uplink transmission is equal to a priority of the second uplink transmission; and transmitting the first uplink channel in the slot.

In another aspect of the present disclosure, provided herein is a processing device in a wireless communication system. The processing device includes: at least one processor; and at least one computer memory operably connected to the at least one processor and storing instructions that, when executed, cause the at least one processor to perform operations. The operations include: receiving a DCI format scheduling first uplink transmission on a cell, wherein the first uplink transmission has a third priority that is not related to a first priority index indicating a low priority or a second priority index indicating a high priority; determining a slot for the first uplink transmission based on the DCI format; based on the first uplink transmission overlapping in time with second uplink transmission related to the first priority index or the second priority index within the slot, multiplexing the first uplink transmission onto a first uplink channel by considering that a priority of the first uplink transmission is equal to a priority of the second uplink transmission; and transmitting the first uplink channel in the slot.

In another aspect of the present disclosure, provided herein is a computer-readable storage medium configured to store at least one program code including instructions that, when executed, cause at least one processor to perform operations. The operations include: receiving a DCI format scheduling first uplink transmission on a cell, wherein the first uplink transmission has a third priority that is not related to a first priority index indicating a low priority or a second priority index indicating a high priority; determining a slot for the first uplink transmission based on the DCI format; based on the first uplink transmission overlapping in time with second uplink transmission related to the first priority index or the second priority index within the slot, multiplexing the first uplink transmission onto a first uplink channel by considering that a priority of the first uplink transmission is equal to a priority of the second uplink transmission; and transmitting the first uplink channel in the slot.

In another aspect of the present disclosure, provided herein is a computer program stored on a computer-readable storage medium. The computer program includes at least one program code including instructions that, when executed, cause at least one processor to perform operations. The operations include: receiving a DCI format scheduling first uplink transmission on a cell, wherein the first uplink transmission has a third priority that is not related to a first priority index indicating a low priority or a second priority index indicating a high priority; determining a slot for the first uplink transmission based on the DCI format; based on the first uplink transmission overlapping in time with second uplink transmission related to the first priority index or the second priority index within the slot, multiplexing the first uplink transmission onto a first uplink channel by considering that a priority of the first uplink transmission is equal to a priority of the second uplink transmission; and transmitting the first uplink channel in the slot.

In another aspect of the present disclosure, provided herein is a method of receiving, by a base station (BS), an uplink signal from a UE in a wireless communication system. The method includes: transmitting a DCI format scheduling first uplink transmission on a cell, wherein the first uplink transmission has a third priority that is not related to a first priority index indicating a low priority or a second priority index indicating a high priority; determining a slot for the first uplink transmission based on the DCI format; and based on the first uplink transmission overlapping in time with second uplink transmission related to the first priority index or the second priority index within the slot, receiving a first uplink channel in the slot, wherein the first uplink channel is determined by considering that a priority of the first uplink transmission is equal to a priority of the second uplink transmission.

In a further aspect of the present disclosure, provided herein is a BS configured to receive an uplink signal from a UE in a wireless communication system. The BS includes: at least one transceiver; at least one processor; and at least one computer memory operably connected to the at least one processor and storing instructions that, when executed, cause the at least one processor to perform operations. The operations include: transmitting a DCI format scheduling first uplink transmission on a cell, wherein the first uplink transmission has a third priority that is not related to a first priority index indicating a low priority or a second priority index indicating a high priority; determining a slot for the first uplink transmission based on the DCI format; and based on the first uplink transmission overlapping in time with second uplink transmission related to the first priority index or the second priority index within the slot, receiving a first uplink channel in the slot, wherein the first uplink channel is determined by considering that a priority of the first uplink transmission is equal to a priority of the second uplink transmission.

In each aspect of the present disclosure, the method for the UE or the operations of the UE, the processing device, or the storage medium may include, based on the first uplink transmission not overlapping in time with uplink transmission with a priority different from the priority of the first uplink transmission within the slot, multiplexing the first uplink transmission onto a second uplink channel by considering that the priority of the first uplink transmission is either the low priority or the high priority.

In each aspect of the present disclosure, the method for the UE or the operations of the UE, the processing device, or the storage medium may include further receiving information regarding a priority to be used for the third priority in a state where transmission of the third priority does not overlap in time with uplink transmission having a different priority among the first priority and the second priority.

In each aspect of the present disclosure, the method for the UE or the operations of the UE, the processing device, or the storage medium may include receiving a first resource configuration for the low priority and a second resource configuration for the high priority; based on the priority of the second uplink transmission being the low priority, determining resources of the first uplink channel based on the first resource configuration; and based on the priority of the second uplink transmission being the high priority, determining resources of the second uplink channel based on the second resource configuration.

In each aspect of the present disclosure, the method or the operations of the BS may include, based on the first uplink transmission does not overlapping in time with uplink transmission with a priority different from the priority of the first uplink transmission within the slot, receiving a second uplink channel in the slot, wherein the second uplink channel is determined by considering that the priority of the first uplink transmission is either the low priority or the high priority.

In each aspect of the present disclosure, the method or the operations of the BS may include transmitting information regarding a priority to be used for the third priority in a state where transmission of the third priority does not overlap in time with uplink transmission having a different priority among the first priority and the second priority.

In each aspect of the present disclosure, the method or the operations of the BS may include: transmitting a first resource configuration for the low priority and a second resource configuration for the high priority; based on the priority of the second uplink transmission being the low priority, determining resources of the first uplink channel based on the first resource configuration; and based on the priority of the second uplink transmission being the high priority, determining resources of the second uplink channel based on the second resource configuration.

The foregoing solutions are merely a part of the examples of the present disclosure and various examples into which the technical features of the present disclosure are incorporated may be derived and understood by persons skilled in the art from the following detailed description.

## Advantageous Effects

According to some implementations of the present disclosure, a wireless communication signal may be efficiently transmitted/received. Accordingly, the total throughput of a wireless communication system may be raised.

According to some implementations of the present disclosure, various services with different requirements may be efficiently supported in a wireless communication system.

According to some implementations of the present disclosure, delay/latency generated during radio communication between communication devices may be reduced.

According to some implementations of the present disclosure, when transmissions with various priorities overlap in time, the transmissions may be properly handled.

The effects according to the present disclosure are not limited to what has been particularly described hereinabove and other effects not described herein will be more clearly understood by persons skilled in the art related to the present disclosure from the following detailed description.

## BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:

FIG. 1 illustrates an example of a communication system 1 to which implementations of the present disclosure are applied;

FIG. 2 is a block diagram illustrating examples of communication devices capable of performing a method according to the present disclosure;

FIG. 3 illustrates another example of a wireless device capable of performing implementation(s) of the present disclosure;

FIG. 4 illustrates an example of a frame structure used in a 3rd generation partnership project (3GPP)-based wireless communication system;

FIG. 5 illustrates a resource grid of a slot;

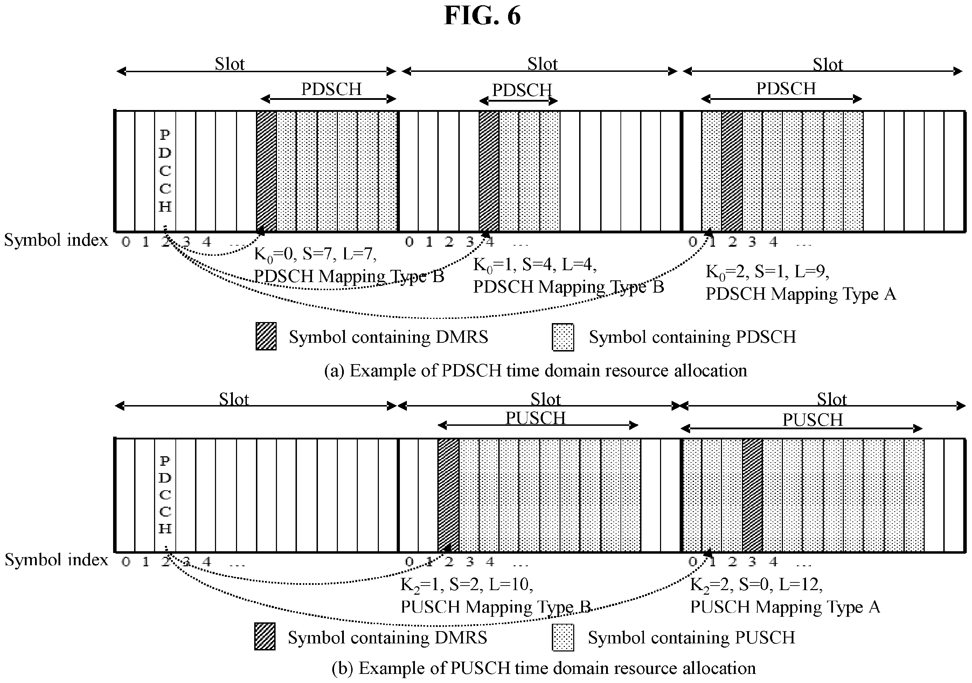

FIG. 6 illustrates an example of physical downlink shared channel (PDSCH) time domain resource assignment (TDRA) caused by a physical downlink control channel (PDCCH) and an example of physical uplink shared channel (PUSCH) TDRA caused by the PDCCH;

FIG. 7 illustrates a hybrid automatic repeat request-acknowledgement (HARQ-ACK) transmission/reception procedure;

FIG. 8 illustrates a flow of uplink signal transmission at a user equipment (UE) according to some implementations of the present disclosure; and

FIG. 9 illustrates a flow of uplink signal reception at a base station (BS) according to some implementations of the present disclosure.

## DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.331, etc.

In examples of the present disclosure described later, if a device "assumes" something, this may mean that a channel transmission entity transmits a channel in compliance with the corresponding "assumption." This also may mean that a channel reception entity receives or decodes the channel in the form of conforming to the "assumption" on the premise that the channel has been transmitted in compliance with the "assumption"

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH cell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to as a new RAT (NR) or fifth-generation (5G) RAT, and a system using NR or supporting NR is referred to as an NR system.

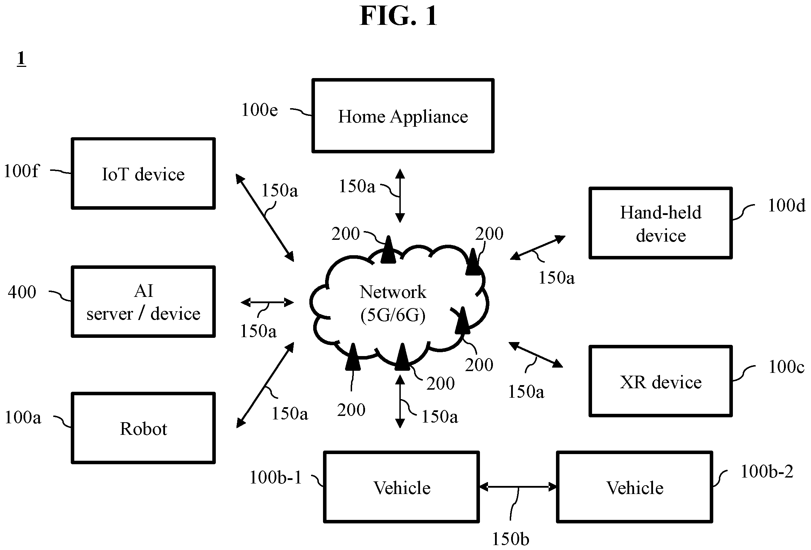

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

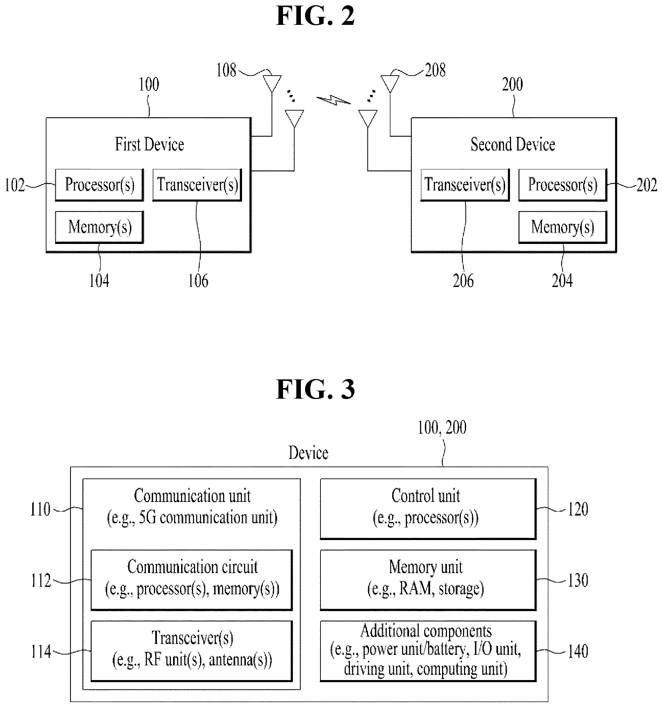

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/-proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/-proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

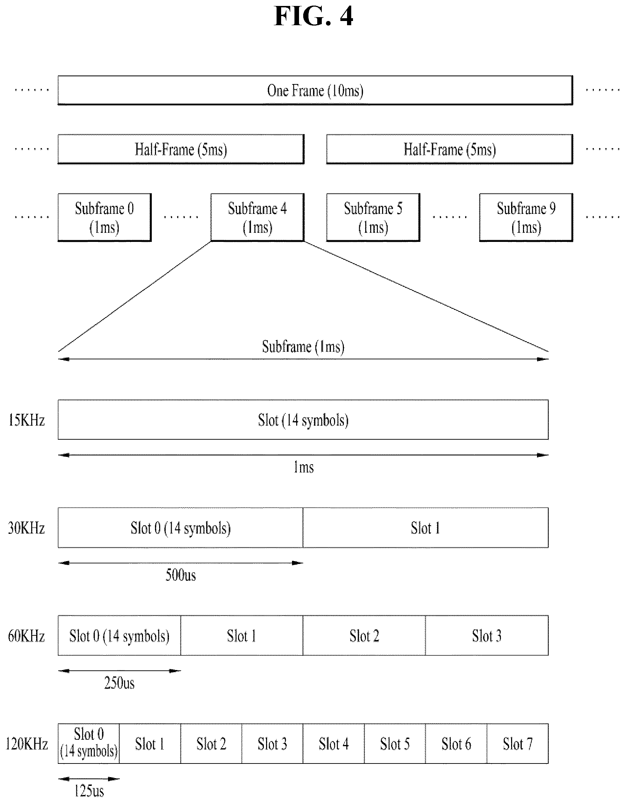

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of $T_f = (\triangle f_{max} * N_f / 100) * T_c = 10$ ms and is divided into two half-frames of 5 ms each. A basic time unit for NR is $T_c = 1/(\triangle f_{max} * N_f)$ where $\triangle f_{max} = 480*10^3$ Hz and $N_f = 4096$. For reference, a basic time unit for LTE is $T_s = 1/(\triangle f_{ref} * N_{f,ref})$ where $\Delta f_{ref} = 15*10^3$ Hz and $N_{f,ref} = 2048$. $T_c$ and $T_f$ have the relationship of a constant $\kappa = T_c/T_f = 64$. Each half-frame includes 5 subframes and a duration $T_{sf}$ of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing $\Delta f = 2^u * 15$ kHz. The table below shows the number of OFDM symbols ($N^{slot}_{symb}$) per slot, the number of slots ($N^{frame,u}_{slot}$) per frame, and the number of slots ($N^{subframe,u}_{slot}$) per subframe.

[Table 1]

| $u$ | $N^{slot}_{symb}$ | $N^{frame,u}_{slot}$ | $N^{subframe,u}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing $\triangle f = 2^u * 15$ kHz.

[Table 2]

| $u$ | $N^{slot}_{symb}$ | $N^{frame,u}_{slot}$ | $N^{subframe,u}_{slot}$ |
|---|---|---|---|
| 2 | 12 | 40 | 4 |

For a subcarrier spacing configuration u, slots may be indexed within a subframe in ascending order as follows: $n^u_s \in \{0, ..., n^{subframe,u}_{slot} - 1\}$ and indexed within a frame in ascending order as follows: $n^u_{s,f} \in \{0, ..., n^{frame,u}_{slot} - 1\}$.

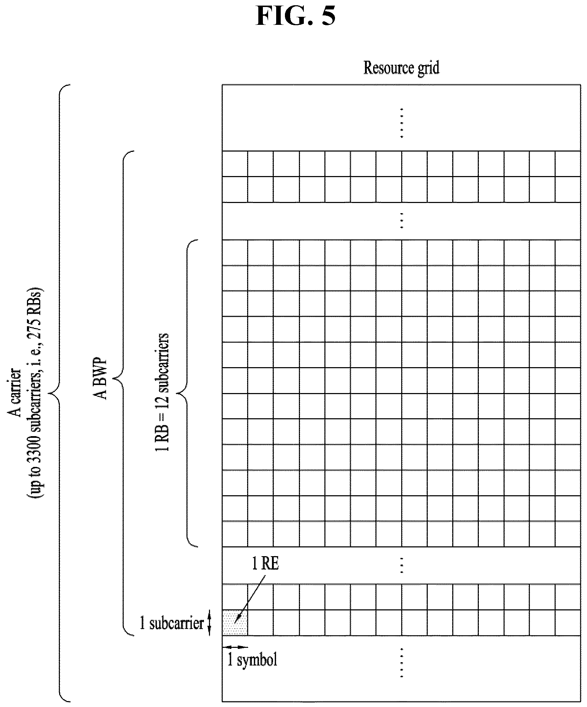

FIG. 5 illustrates a resource grid of a slot. The slot includes multiple (e.g., 14 or 12) symbols in the time domain. For each numerology (e.g., subcarrier spacing) and carrier, a resource grid of $N^{size,u}_{grid,x} * N^{RB}_{sc}$ subcarriers and $N^{subframe,u}_{symb}$ OFDM symbols is defined, starting at a common resource block (CRB) $N^{start,u}_{grid}$ indicated by higher layer signaling (e.g. RRC signaling), where $N^{size,u}_{grid,x}$ is the number of resource blocks (RBs) in the resource grid and the subscript x is DL for downlink and UL for uplink. $N^{RB}_{sc}$ is the number of subcarriers per RB. In the 3GPP-based wireless communication system, $N^{RB}_{sc}$ is typically 12. There is one resource grid for a given antenna port $p$, a subcarrier spacing configuration $u$, and a transmission link (DL or UL). The carrier bandwidth $N^{size,u}_{grid}$ for the subcarrier spacing configuration $u$ is given to the UE by a higher layer parameter (e.g., RRC parameter). Each element in the resource grid for the antenna port $p$ and the subcarrier spacing configuration $u$ is referred to as a resource element (RE) and one complex symbol may be mapped to each RE. Each RE in the resource grid is uniquely identified by an index $k$ in the frequency domain and an index $l$ representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration $u$. The center of subcarrier 0 of CRB 0 for the subcarrier spacing configuration $u$ is equal to 'Point A' which serves as a common reference point for RB grids. The PRBs for subcarrier spacing configuration $u$ are defined within a bandwidth part (BWP) and numbered from 0 to $N^{size,u}_{BWP,i}-1$, where i is a number of the BWP. The relation between a PRB $n_{PRB}$ in a BWP i and a CRB $n^u_{CRB}$ is given by: $n^u_{PRB} = n^u_{CRB} + N^{size,u}_{BWP,i}$, where $N^{size}_{BWP,i}$ is a CRB in which the BWP starts relative to CRB 0. The BWP includes a plurality of consecutive RBs in the frequency domain. For example, the BWP may be a subset of contiguous CRBs defined for a given numerology $u_i$ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB $N^{start}_{BWP} = O_{carrier} + RB_{start}$ and the number of contiguous RBs $N^{size}_{BWP} = L_{RB}$ provided by an RRC parameter *locationAndBandwidth,* which indicates an offset $RB_{set}$ and a length $L_{RB}$ as a resource indicator value (RIV) on the assumption of $N^{start}_{BWP} = 275$, and a value $O_{carrier}$ provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to $N^{size,u}_{BWP,i}-1$, where i denotes a BWP number. The VRBs may be mapped to PRBs according to interleaved mapping or non-interleaved mapping. In some implementations, VRB n may be mapped to PRB n for non-interleaved VRB-to-PRB mapping.

The UE for which carrier aggregation is configured may be configured to use one or more cells. If the UE is configured with a plurality of serving cells, the UE may be configured with one or multiple cell groups. The UE may also be configured with a plurality of cell groups associated with different BSs. Alternatively, the UE may be configured with a plurality of cell groups associated with a single BS. Each cell group of the UE includes one or more serving cells and includes a single PUCCH cell for which PUCCH resources are configured. The PUCCH cell may be a Pcell or an Scell configured as the PUCCH cell among Scells of a corresponding cell group. Each serving cell of the UE belongs to one of cell groups of the UE and does not belong to a plurality of cells.

NR frequency bands are defined as two types of frequency ranges, i.e., FR1 and FR2. FR2 is also referred to as millimeter wave (mmW). The following table shows frequency ranges within which NR may operate.

[Table 3]

| Frequency Range designation | Corresponding frequency range | Subcarrier Spacing |
| --- | --- | --- |
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to a HARQ-ACK codebook. In particular, a bit sequence in which HARQ-ACK information bits are arranged according to a predetermined rule is called a HARQ-ACK codebook.

- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (LI). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as a HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 4.

(0) PUCCH format 0 (PF0 or F0)

- Supported UCI payload size: up to K bits (e.g., K=2)
- Number of OFDM symbols constituting a single PUCCH: 1 to X symbols (e.g., X=2)
- Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
- Configuration for PUCCH format 0 includes the following parameters for a corresponding PUCCH resource: an index for initial cyclic shift, the number of symbols for PUCCH transmission, and/or the first symbol for PUCCH transmission.

(1) PUCCH format 1 (PF1 or F1)

- Supported UCI payload size: up to K bits (e.g., K=2)
- Number of OFDM symbols constituting a single PUCCH: Y to Z symbols (e.g., Y=4 and Z=14)
- Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
- Configuration for PUCCH format 1 includes the following parameters for a corresponding PUCCH resource: an index for initial cyclic shift, the number of symbols for PUCCH transmission, the first symbol for PUCCH transmission, and/or an index for the OCC.

(2) PUCCH format 2 (PF2 or F2)

- Supported UCI payload size: more than K bits (e.g., K=2)
- Number of OFDM symbols constituting a single PUCCH: 1 to X symbols (e.g., X=2)
- Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
- Configuration for PUCCH format 2 includes the following parameters for a corresponding PUCCH resource: the number of PRBs, the number of symbols for PUCCH transmission, and/or the first symbol for PUCCH transmission.

(3) PUCCH format 3 (PF3 or F3)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).

Configuration for PUCCH format 3 includes the following parameters for a corresponding PUCCH resource: the number of PRBs, the number of symbols for PUCCH transmission, and/or the first symbol for PUCCH transmission.

(4) PUCCH format 4 (PF4 or F4)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
- Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

[Table 4]

| PUCCH format | Length in OFDM symbols $N^{PUCCH}_{symb}$ | Number of bits | Usage | Etc. |
|---|---|---|---|---|
| 0 | 1 - 2 | =<2 | HARQ, SR | Sequence selection |
| 1 | 4 - 14 | =<2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM(no UE multiplexing) |
| 4 | 4 - 14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, $N_{UCI}$.

- PUCCH resource set #0, if the number of UCI bits =< 2
- PUCCH resource set #1, if 2< the number of UCI bits =< $N_1$
  ...
- PUCCH resource set #(K-1), if $N_{K-2}$ < the number of UCI bits =< $N_{K-1}$

Here, K represents the number of PUCCH resource sets (K>1) and $N_i$ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 4).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

Hereinafter, resource allocation by the PDCCH and resource allocation by RRC will be described in more detail.

* Resource Allocation by PDCCH: dynamic grant/assignment

The PDCCH may be used to schedule DL transmission on the PDSCH and UL transmission on the PUSCH. DCI on the PDCCH for scheduling DL transmission may include DL resource assignment that at least includes a modulation and coding format (e.g., modulation and coding scheme (MCS)) index $I_{MCS}$), resource allocation, and HARQ information, associated with a DL-SCH. DCI on the PDCCH for scheduling UL transmission may include a UL scheduling grant that at least includes a modulation and coding format, resource allocation, and HARQ information, associated with a UL-SCH. HARQ information on a DL-SCH or UL-SCH may include a new information indicator (NDI), transport block size (TBS), redundancy version (RV), and HARQ process ID (i.e., HARQ process number). The size and usage of the DCI carried by one PDCCH differs according to a DCI format. For example, DCI format 0_0, DCI format 0_1, or DCI format 0_2 may be used to schedule the PUSCH, and DCI format 1_0, DCI format 1_1, or DCI format 1_2 may be used to schedule the PDSCH. Particularly, DCI format 0_2 and DCI format 1_2 may be used to schedule transmission having higher transmission reliability and lower latency requirements than transmission reliability and latency requirement guaranteed by DCI format 0_0, DCI format 0_1, DCI format 1_0, or DCI format 1_1. Some implementations of the present disclosure may be applied to UL data transmission based on DCL format 0_2. Some implementations of the present disclosure may be applied to DL data reception based on DCI format 1_2.

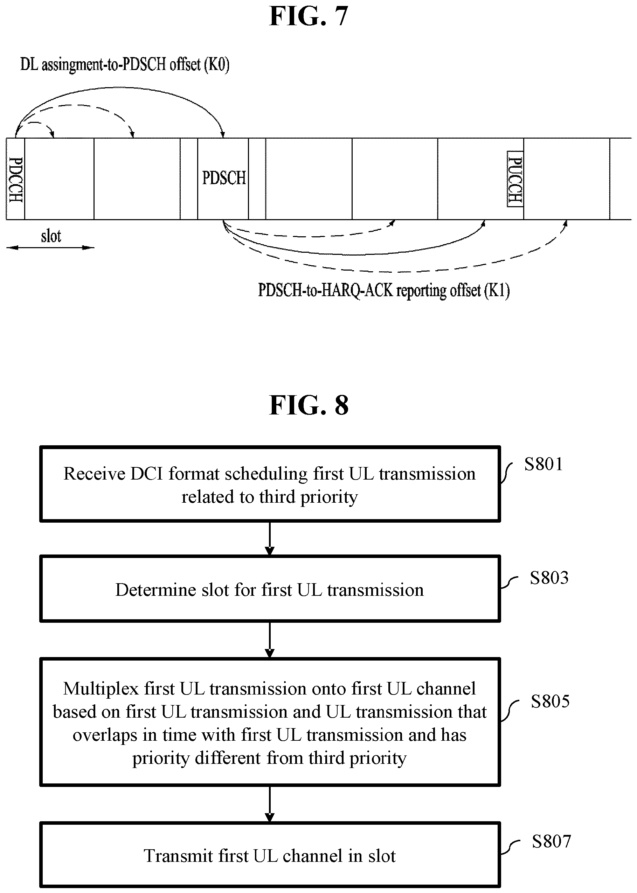

FIG. 7 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index m+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset $K_0$, a start and length indicator value *SLIV* (or directly, a start position (e.g., start symbol index S) and an allocation length (e.g., the number of symbols, *L*) of the PDSCH in a slot), and a PDSCH mapping type. In PUSCH time domain resource configurations, each indexed row defines a UL grant-to-PUSCH slot offset $K_2$, a start position (e.g., start symbol index S) and an allocation length (e.g., the number of symbols, *L*) of the PUSCH in a slot, and a PUSCH mapping type. Ko for the PDSCH and $K_2$ for the PUSCH indicate the difference between the slot with the PDCCH and the slot with the PDSCH or PUSCH corresponding to the PDCCH. *SLIV* denotes a joint indicator of the start symbol S relative to the start of the slot with the PDSCH or PUSCH and the number of consecutive symbols, *L,* counting from the symbol S. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in the present disclosure, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

\* Resource Allocation by RRC

As mentioned above, there are two types of transmission without dynamic grant: configured grant Type 1 and configured grant Type 2. In configured grant Type 1, a UL grant is provided by RRC and stored as a configured UL grant. In configured grant Type 2, the UL grant is provided by the PDCCH and stored or cleared as the configured UL grant based on L1 signaling indicating configured UL grant activation or deactivation. Type 1 and Type 2 may be configured by RRC per serving cell and per BWP. Multiple configurations may be active simultaneously on different serving cells.

When configured grant Type 1 is configured, the UE may be provided with the following parameters through RRC signaling:

- *cs-RNTI* corresponding to a CS-RNTI for retransmission;
- *periodicity* corresponding to a periodicity of configured grant Type 1;
- *timeDomainOffset* indicating an offset of a resource with respect to system frame number (SFN) = 0 in the time domain;
- *timeDomainAllocation* value *m* that provides a row index *m*+1 pointing to the allocation table, indicating a combination of the start symbol *S*, the length *L,* and the PUSCH mapping type;
- *frequencyDomainAllocation* that provides frequency domain resource allocation; and
- *mcsAndTBS* that provides $I_{MCS}$ indicating a modulation order, a target code rate, and a transport block size.

Upon configuration of configured grant Type 1 for a serving cell by RRC, the UE stores the UL grant provided by RRC as a configured UL grant for an indicated serving cell and initializes or re-initializes the configured UL grant to start in a symbol according to *timeDomainOffset and S* (derived from *SLIV*) and to recur with *periodicity.* After the UL grant is configured for configured grant Type 1, the UE may consider that the UL grant recurs in association with each symbol satisfying: [(SFN \* *numberOfSlotsPerFrame* (*numberOfSymbolsPerSlot*) + (slot number in the frame \* *numberOfSymbolsPerSlot*) + symbol number in the slot] = (*timeDomainOffset \* numberOfSymbolsPerSlot + S +* N \* *periodicity*) modulo (1024 \* *numberOfSlotsPerFrame \* numberOfSymbolsPerSlot*), for all N >= 0, where *numberOfSlotsPerFrame* and *numberOfSymbolsPerSlot* indicate the number of consecutive slots per frame and the number of consecutive OFDM symbols per slot, respectively (refer to Table 1 and Table 2).

For configured grant Type 2, the UE may be provided with the following parameters by the BS through RRC signaling:

- *cs-RNTI* corresponding to a CS-RNTI for activation, deactivation, and retransmission; and
- *periodicity* that provides a periodicity of configured grant Type 2.

An actual UL grant is provided to the UE by the PDCCH (addressed to the CS-RNTI). After the UL grant is configured for configured grant Type 2, the UE may consider that the UL grant recurs in association with each symbol satisfying: [(SFN \* *numberOfSlotsPerFrame \* numberOfSymbolsPerSlot*) + (slot number in the frame \* *numberOfSymbolsPerSlot*) + symbol number in the slot] = [(SFN$_{start\ time}$ \* *numberOfSlotsPerFrame \* numberOfSymbolsPerSlot* + slot$_{start\ time}$ \* *numberOfSymbolsPerSlot* + symbol$_{start\ time}$) + N \* *periodicity*] modulo (1024 \* *numberOfSlotsPerFrame \* numberOfSymbolsPerSlot*), for all N >= 0, where SFN$_{start\ time}$, slot$_{start\ time}$, and symbol$_{start\ time}$ represent an SFN, a slot, and a symbol, respectively, of the first transmission opportunity of the PUSCH after the configured grant is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* and/or a parameter *harq-ProcID-Offset2* used to derive HARQ process IDs for configured UL grants may be further provided by the BS to the UE. *harq-ProcID-Offset* is an offset of a HARQ process for a configured grant for operation with shared spectrum channel access, and *harq-ProcID-Offset2* is an offset of a HARQ process for a configured grant. In the present disclosure, *cg-RetransmissionTimer* is a duration after (re) transmission based on a configured grant in which the UE should not autonomously perform retransmission based on the HARQ process of the (re)transmission. *cg-RetransmissionTimer* may be provided to the UE by the BS when retransmission on a configured UL grant is configured. For configured grants configured with neither *harq-ProcID-Offset* nor *cg-RetransmissionTimer,* the HARQ process ID associated with the first symbol of UL transmission may be derived from the following equation: HARQ Process ID = [*floor*(*CURRENT_symbol*/*periodicity*)] modulo *nrofHARQ-Processes*. For configured UL grants with *harq-ProcID-Offset2,* the HARQ process ID associated with the first symbol of UL transmission may be derived from the following equation: HARQ Process ID = [floor(CURRENT_symbol / *periodicity*)] modulo *nrofHARQ-Processes* + *harq-ProcID-Offset2,* where CURRENT_symbol = (SFN * *numberOfSlotsPerFrame* * *numberOfSymbolsPerSlot* + slot number in the frame * *numberOfSymbolsPerSlot* + symbol number in the slot), and *numberOfSlotsPerFrame* and *numberOfSymbolsPerSlot* denote the number of consecutive slots per frame and the number of consecutive OFDM symbols per slot, respectively. For configured UL grants with *cg-RetransmissionTimer,* the UE may select a HARQ process ID from among HARQ process IDs available for the configured grant configuration.

On DL, the UE may be configured with semi-persistent scheduling (SPS) per serving cell and per BWP by RRC signaling from the BS. For DL SPS, DL assignment is provided to the UE by the PDCCH and stored or cleared based on L1 signaling indicating SPS activation or deactivation. When SPS is configured, the UE may be provided with the following parameters by the BS through RRC signaling (e.g., SPS configuration) used to configure a semi-persistent transmission:

- *cs-RNTI* corresponding to a CS-RNTI for activation, deactivation, and retransmission;
- *nrofHARQ-Processes* that provides the number of HARQ processes for SPS;
- *periodicity* that provides a periodicity of configured DL assignment for SPS;
- *n1PUCCH-AN that* provides a HARQ resource for a PUCCH for SPS (the network configures the HARQ resource as format 0 or format 1, and the actual PUCCH resource is configured by *PUCCH-Config* and referred to in *n1PUCCH-AN* by the ID thereof).

Multiple DL SPS configurations may be configured within the BWP of a serving cell. After DL assignment is configured for SPS, the UE may consider sequentially that N-th DL assignment occurs in a slot satisfying: (*numberOfSlotsPerFrame* * SFN + slot number in the frame) = [(*numberOfSlotsPerFrame* * SFN$_{start\ time}$ + slot$_{start\ time}$) + N * *periodicity* * *numberOfSlotsPerFrame* / 10] modulo (1024 * *numberOfSlotsPerFrame*), where SFN$_{start\ time}$ and slot$_{start\ time}$ represent an SFN and a slot, respectively, of first transmission of the PDSCH after configured DL assignment is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* used to derive HARQ process IDs for configured DL assignments may be further provided by the BS to the UE. *harq-ProcID-Offset* is an offset of a HARQ process for SPS. For configured DL assignments without *harq-ProcID-Offset,* a HARQ process ID associated with a slot in which DL transmission starts may be determined from the following equation: HARQ Process ID = [floor (CURRENT_slot * 10 / (*numberOfSlotsPerFrame* * *periodicity*))] modulo *nrofHARQ-Processes,* where CURRENT_slot = [(SFN * *numberOfSlotsPerFrame)* + slot number in the frame], and *numberOfSlotsPerFrame* denotes the number of consecutive slots per frame. For configured DL assignments with *harq-ProcID-Offset,* a HARQ process ID associated with a slot in which DL transmission starts may be determined from the following equation: HARQ Process ID = [floor (CURRENT_slot / periodicity)] modulo nrofHARQ-Processes + harq-ProcID-Offset, where CURRENT_slot = [(SFN * numberOfSlotsPerFrame) + slot number in the frame], and *numberOfSlotsPerFrame* denotes the number of consecutive slots per frame.

If the CRC of a corresponding DCI format is scrambled with the CS-RNTI provided by the RRC parameter *cs-RNTI* and a new data indicator field for an enabled transport block is set to 0, the UE validates, for scheduling activation or scheduling release, a DL SPS assignment PDCCH or a configured UL grant Type 2 PDCCH. Validation of the DCI format is achieved if all fields for the DCI format are set according to Table 5 and Table 6. Table 5 shows an example of special fields for DL SPS and UL grant Type 2 scheduling activation PDCCH validation, and Table 6 shows an example of special fields for DL SPS and UL grant Type 2 scheduling release PDCCH validation.

[Table 5]

|  | DCI format 0_0/0_1 | DCI format 1_0 | DCI format 1_1 |
|---|---|---|---|
| HARQ process number | set to all '0's | set to all '0's | set to all '0's |
| Redundancy version | set to '00' | set to '00' | For the enabled transport block: set to '00' |

[Table 6]

|  | DCI format 0_0 | DCI format 1_0 |
|---|---|---|
| HARQ process number | set to all '0's | set to all '0's |
| Redundancy version | set to '00' | set to '00' |
| Modulation and coding scheme | set to all '1's | set to all '1's |

(continued)

|  | DCI format 0_0 | DCI format 1_0 |
|---|---|---|
| Resource block assignment | set to all '1's | set to all '1's |

Actual DL assignment and UL grant for DL SPS or UL grant Type 2, and a corresponding MCS are provided by resource assignment fields (e.g., a TDRA field providing a TDRA value m, an FDRA field providing frequency resource block assignment, and/or an MCS field) in the DCI format carried by a corresponding DL SPS or UL grant Type 2 scheduling activation PDCCH. If validation is achieved, the UE considers information in the DCI format as valid activation or valid release of DL SPS or configured UL grant Type 2.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

FIG. 7 illustrates a HARQ-ACK transmission/reception procedure.

Referring to FIG. 7, the UE may detect a PDCCH in a slot n. Next, the UE may receive a PDSCH in a slot n+K0 according to scheduling information received through the PDCCH in the slot n and then transmit UCI through a PUCCH in a slot n+K1. In this case, the UCI includes a HARQ-ACK response for the PDSCH.

The DCI (e.g., DCI format 1_0 or DCI format 1_1) carried by the PDCCH for scheduling the PDSCH may include the following information.

- FDRA: FDRA indicates an RB set allocated to the PDSCH.
- TDRA: TDRA indicates a DL assignment-to-PDSCH slot offset K0, the start position (e.g., symbol index S) and length (e.g., the number of symbols, L) of the PDSCH in a slot, and the PDSCH mapping type. PDSCH mapping Type A or PDSCH mapping Type B may be indicated by TDRA. For PDSCH mapping Type A, the DMRS is located in the third symbol (symbol #2) or fourth symbol (symbol #3) in a slot. For PDSCH mapping Type B, the DMRS is allocated in the first symbol allocated for the PDSCH.
- PDSCH-to-HARQ_feedback timing indicator: This indicator indicates K1.

If the PDSCH is configured to transmit a maximum of one TB, a HARQ-ACK response may consist of one bit. If the PDSCH is configured to transmit a maximum of 2 TBs, the HARQ-ACK response may consist of 2 bits when spatial bundling is not configured and one bit when spatial bundling is configured. When a HARQ-ACK transmission timing for a plurality of PDSCHs is designated as slot n+K1, UCI transmitted in slot n+K1 includes a HARQ-ACK response for the plural PDSCHs.

In the present disclosure, a HARQ-ACK payload consisting of HARQ-ACK bit(s) for one or plural PDSCHs may be referred to as a HARQ-ACK codebook. The HARQ-ACK codebook may be categorized as i) a semi-static HARQ-ACK codebook, ii) a dynamic HARQ-ACK codebook and iii) HARQ process based HARQ-ACK codebook, according to a HARQ-ACK payload determination scheme.

In the case of the semi-static HARQ-ACK codebook, parameters related to a HARQ-ACK payload size that the UE is to report are semi-statically determined by a (UE-specific) higher layer (e.g., RRC) signal. The HARQ-ACK payload size of the semi-static HARQ-ACK codebook, e.g., the (maximum) HARQ-ACK payload (size) transmitted through one PUCCH in one slot, may be determined based on the number of HARQ-ACK bits corresponding to a combination (hereinafter, bundling window) of all DL carriers (i.e., DL serving cells) configured for the UE and all DL scheduling slots (or PDSCH transmission slots or PDCCH monitoring slots) for which the HARQ-ACK transmission timing may be indicated. That is, in a semi-static HARQ-ACK codebook scheme, the size of the HARQ-ACK codebook is fixed (to a maximum value) regardless of the number of actually scheduled DL data. For example, DL grant DCI (PDCCH) includes PDSCH-to-HARQ-ACK timing information, and the PDSCH-to-HARQ-ACK timing information may have one (e.g., k) of a plurality of values. For example, when the PDSCH is received in slot #m and the PDSCH-to-HARQ-ACK timing information in the DL grant DCI (PDCCH) for scheduling the PDSCH indicates k, the HARQ-ACK information for the PDSCH may be transmitted in slot #(m+k). As an example, $k \in \{1, 2, 3, 4, 5, 6, 7, 8\}$. When the HARQ-ACK information is transmitted in slot #n, the HARQ-ACK information may include possible maximum HARQ-ACK based on the bundling window. That is, HARQ-ACK information of slot #n may include HARQ-ACK corresponding to slot #(n-k). For example, when $k \in \{1, 2, 3, 4, 5, 6, 7, 8\}$, the HARQ-ACK information of slot #n may include HARQ-ACK corresponding to slot #(n-8) to slot #(n-1) regardless of actual DL data reception (i.e., HARQ-ACK of a maximum number). Here, the HARQ-ACK information may be replaced with a HARQ-ACK codebook or a HARQ-ACK payload. A slot may be understood/replaced as/with a candidate occasion for DL data reception. As described in the example, the bundling window may be determined based on the PDSCH-to-HARQ-ACK timing based on a HARQ-ACK slot, and a PDSCH-to-HARQ-ACK timing set may have predefined values (e.g., {1, 2, 3, 4, 5, 6, 7, 8} ) or may be configured by higher layer (RRC) signaling. The semi-static HARQ-ACK codebook is referred to as a Type-1 HARQ-ACK codebook. For the Type-1 HARQ-ACK codebook, the number of bits to be transmitted in a HARQ-ACK report is fixed and may be potentially large. If many cells are configured but only few cells are scheduled, the Type-1 HARQ-ACK codebook may be inefficient.

In the case of the dynamic HARQ-ACK codebook, the HARQ-ACK payload size that the UE is to report may be dynamically changed by the DCI etc. The dynamic HARQ-ACK codebook is referred to as a Type-2 HARQ-ACK codebook. The Type-2 HARQ-ACK codebook may be considered as optimized HARQ-ACK feedback because the UE sends feedback only for scheduled serving cells. However, in poor channel conditions, the UE may erroneously determine the number of scheduled serving cells. To solve this problem, a downlink assignment index (DAI) may be included as a part of DCI. For example, in the dynamic HARQ-ACK codebook scheme, DL scheduling DCI may include a counter-DAI (i.e., c-DAI) and/or a total-DAI (i.e., t-DAI). Here, the DAI indicates a downlink assignment index and is used for the BS to inform the UE of transmitted or scheduled PDSCH(s) for which HARQ-ACK(s) are to be included in one HARQ-ACK transmission. Particularly, the c-DAI is an index indicating order between PDCCHs carrying DL scheduling DCI (hereinafter, DL scheduling PDCCHs), and t-DAI is an index indicating the total number of DL scheduling PDCCHs up to a current slot in which a PDCCH with the t-DAI is present.

In the case of a HARQ-ACK codebook based on HARQ processes, the HARQ-ACK payload is determined based on all HARQ processes of all configured (or activated) serving cells in a PUCCH group. For example, the size of the HARQ-ACK payload to be reported by the UE using the HARQ-ACK codebook based on HARQ processes may be determined based on the number of all configured or activated serving cells in the PUCCH group configured for the UE and the number of HARQ processes for the serving cells. The HARQ-ACK codebook based on HARQ processes is also referred to as a Type-3 HARQ-ACK codebook. The type-3 HARQ-ACK codebook may be applied to one-shot feedback.

FIG. 8 illustrates a discontinuous reception (DRX) operation applicable to implementation(s) of the present disclosure.

The UE may perform a discontinuous reception (DRX) operation while executing the processes and/or methods according to the implementation(s) of the present disclosure. When the UE is configured with DRX, the UE may reduce power consumption by discontinuously receiving DL signals. DRX may be performed in the RRC_IDLE state, RRC_INACTIVE state, and RRC_CONNECTED state. In the RRC_IDLE and RRC_INACTIVE states, DRX is used for the UE to discontinuously receive paging signals. Hereinafter, DRX performed in the RRC_CONNECTED state (RRC_CONNECTED DRX) will be described.

Extended reality (XR) is an ultra-immersive technology and service that provides an environment in which the users are capable of communicating and living without restrictions on time and space in a virtual space similar to reality by utilizing virtual reality (VR), augmented reality (AR), mixed reality (MR), holography, etc. XR is one of major services to be introduced in an NR wireless communication system. XR is typically characterized by specific traffic with one or more DL video streams which are closely synchronized with frequent UL pose/control updates. In addition, XR has a high data rate and a stringent packet delay budget (PDB).

A video stream is the most important flow for XR use cases. A video is divided into separate frames before transmission. A data packet representing a video frame may be transmitted wirelessly. An average inter-arrival time of packets is the reciprocal of a frame rate in frames per second. For video streams, if there are a lot of changes in the video on a screen, the communication traffic is high, whereas if there are few change in the video, the traffic is low.

In XR, videos need to be displayed accurately on the screen in accordance with the flow of time. Therefore, once the point in time at which the provision of XR data is required has passed, the previous data becomes useless, and it is better to provide new data.

A successful implementation of XR requires support from a wireless system. In a 3GPP-based wireless communication system, for example, in an NR wireless communication system, utilizing preconfigured resources such as SPS/CG is being considered to support XR. For example, the BS may provide an SPS/CG configuration to the UE in consideration of an average inter-arrival time of packets. However, the actual inter-arrival time of packets is random due to jitter. Jitter refers to a deviation of time that undesirably occurs in a signal having a periodicity. In XR, since the amount of information per frame is different, a time required to process frames before transmitting the frames is different, resulting in jitter. Therefore, even if SPS/CG resources that occur periodically are configured for the UE, the UE may fail to perform PDSCH reception/PUSCH transmission in a PDSCH occasion/PUSCH occasion due to jitter.

In the present disclosure, method(s) by which the UE using a plurality of services receives an indication regarding a service to be provided from the BS through scheduled radio resources and performs UE operations necessary for the service based on information related to the indicated service.

In NR, one or more SPS PDSCHs or CG PUSCHs may be configured for the UE for periodic transmission and reception or a low delay time and PDCCH overhead. A corresponding configured/indicated resource may be repeated in the time domain with a periodicity according to each SPS/CG configuration. For example, first configured/indicated resource allocation may be repeated at a configured periodicity by the SPS/CG configuration, and the UE may perform DL reception/UL transmission on a corresponding resource without a separate PDCCH reception process. Meanwhile, there are various types of data that may be generated in XR. Among the data, it is considered that sensor and location information of the UE and video data, generally reported at a specific periodicity, are transmitted and received on SPS/CG resources. In such data, a traffic arrival time is not constant and jitter may occur for reasons such as a video encoding time, a sensor measurement time, a higher layer operation, or a routing change of a network.

For XR services, dynamic scheduling may also be considered. When latency-sensitive XR services are used, it is necessary to consider a method for ensuring that such transmissions are not canceled by other transmissions. In addition, the UE needs to receive appropriate DL assignments and/or UL grants for the service. In NR, a priority at the PHY layer has been introduced for a plurality of services. Thus, the UE may perform UL transmission or DL reception using only one of overlapping radio resources. Alternatively, the UE may divide overlapping UL transmissions into a plurality of groups and perform UL multiplexing. In this process, lower-priority transmissions may be canceled, and thus a method of preventing the cancellation of XR transmissions need to be considered.

If the BS allocates resources to a location sufficiently far away in time from an expected traffic occurrence time point in consideration of jitter at a data occurrence time point, availability of resources may be guaranteed, but a delay time may occur. Conversely, if an SPS/CG resource with a fixed periodicity is allocated at an expected data occurrence time point, a greater delay time may occur due to a waiting time to the next available resource during occurrence of jitter.

On the other hand, since some data is generated based on events, it is impossible to accurately determine an actual data occurrence time point. However, it is considered to use the SPS/CG resource even for such data in order to reduce a delay time caused by scheduling. In this case, skipping method(s) in which a network allocates a sufficiently large number of resources at a short periodicity in preparation for occurrence of data, and the UE or BS selectively uses some of these resources and does not actually use other resource(s) may be considered. However, in order to use the method of skipping transmission and reception, the UE and BS needs to carefully consider a response signal for determining whether to perform reception and/or transmission between the UE and the BS. If the UE needs to transmit the response signal even for transmission that the UE has not received, the BS should always prepare for resources on which the UE is to transmit the response signal. Considering that the skipping method is based on configuring a sufficiently large number of resources within radio resources, configuring resources so that the UE may transmit the response signal even for transmission that the UE has not received may act as significant UL burden. Considering that these resources may be multiplexed between UEs, the burden of UL resources should be considered more important.

When XR services or similar third-party services are used, the aforementioned aspects need to be considered. For example, it is necessary to consider a method for ensuring low latency while minimizing the impact on other services. To address such issues, implementations in which the BS includes a multi-level priority indicator or multi-level service indicator in a scheduling message provided to the UE and adjusts transmission priorities and UE operations based thereon will be described in the present disclosure.

Hereinbelow, while implementations of the present disclosure are described based on DL SPS and UL CG radio resources, which are semi-statically configured, the implementations of the present disclosure are not limited thereto and may be extensively applied to radio resources allocated through dynamic scheduling received by the UE. As an example, the implementation(s) of the present disclosure in which the UE determines one HARQ-ACK timing for a plurality of DL radio resources allocated thereto may be applied regardless of an SPS PDSCH and a PDSCH which is indicated by dynamic scheduling. Additionally, when a plurality of radio resources is not configured semi-statically and is configured through dynamic indication, for example, even when a plurality of radio resources is simultaneously configured through DCI, the implementations of the present disclosure may be applied. Therefore, the implementations of the present disclosure may be applied to all types of transmission/reception methods expected by the BS and the UE even if there is no separate explanation. Hereinafter, for convenience of description, the implementations of the present disclosure are described using SPS as a general term that collectively refers to semi-statically configured radio resources (e.g., DL/UL SPS and CG).

In some implementations of the present disclosure, a transmission occasion (TO) may refer to a radio resource configured for SPS/CG (e.g., an SPS PDSCH or a CG PUSCH). An entity performing transmission in a TO (e.g., a BS on DL or a UE on UL) may attempt to perform transmission in the TO, and a receiver (e.g., a UE on DL or a BS on UL) may attempt to perform reception while expecting that there will be transmission in each TO.

Hereinbelow, while the implementations of the present disclosure will be described based on the NR system, the implementations of the present disclosure are not limited to the transmission/reception of NR. Additionally, while, in the present disclosure, the implementations of the present disclosure are described using characteristics and structures of the XR service as an example, the implementations of the present disclosure are not limited to support of the XR service. The implementations of the present disclosure may be applied to all wireless communication transmission/reception structures and services even without separate description.

In the present disclosure, some implementations in which the UE is provided with a multi-level priority indicator for determining transmission/reception priorities and determines the priorities based on the provided indicator will be described.

The present disclosure describes implementations for activating/deactivating semi-static configurations. For example, the implementations of the present disclosure may include a method for the BS to allocate PDSCH/PUSCH radio resource(s) to the UE and a method for the UE to perform DL reception or UL transmission on the allocated radio resource(s). Some implementations of the present disclosure may include a method of transmitting a HARQ-ACK PUCCH response to a PDSCH reception result by the UE and a method of receiving retransmission DCI of the BS through a PDCCH after transmitting a PUSCH. In some implementations of the present disclosure, the UE may transmit signals and channels for announcing capabilities thereof and/or service requirements, and the BS may receive the signals and channels.

Some implementations of the present disclosure may be selectively applied in part. Some implementations of the present disclosure may be performed independently without combination with other implementations, or one or more implementations may be combined and performed in an associated form. Some terms, symbols, sequences, etc. used in the present disclosure may be replaced with other terms, symbols, sequences, etc. as long as the principle of implementations of the present disclosure is maintained.

Some implementations of the present disclosure may be specified to be applied only when the UE receives relevant configuration information from the BS (or core network). In this case, the configuration information may be provided through higher layer signaling (e.g., SIB or RRC signaling). Alternatively, separate signaling (e.g., DCI or MAC control element) indicating the activation or deactivation of corresponding configuration(s) may be used along with the configuration information. In some implementations of the present disclosure, the UE may report information (e.g., capability information) regarding whether the UE is capable of supporting a method according to the implementation, and the BS (or core network) may receive the information.

**\* Implementation 1: Multi-Level Service/Priority Indication**

The following tables show UL multiplexing operations of the UE extracted from 3GPP TS 38.213 V17.1.0. Unless otherwise specified, the clauses mentioned in the tables refer to the clauses in 3GPP TS 38.213. When the UE determines overlapping for PUCCH and/or PUSCH transmissions with different priority indices other than PUCCH transmissions with sidelink (SL) HARQ-ACK reports before considering the limitations for UL transmission, including repetitions if any, as described in clauses 11.1 and 11.1.1 of 3GPP TS 38.213, if the UE is provided with an RRC parameter *UCI-MuxWith-DifferentPriority* and the timeline conditions in clause 9.2.5 for multiplexing UCI in a PUCCH or PUSCH are satisfied, a UE procedure for reporting UCI may be performed according to Table 7 and/or Table 8.

[Table 7]

| |
|---|
| - first, the UE resolves overlapping for PUCCH and/or PUSCH transmissions of a same priority index as described in clauses 9.2.5 and 9.2.6<br>- second, the UE resolves the overlapping for PUCCH transmissions of different priority indexes, and<br>    - if the UE is provided *subslotLengthForPUCCH* in the second *PUCCH-Config,* a PUCCH transmission of smaller priority index is associated with the first overlapping slot with *subslotLengthForPUCCH* symbols of larger priority index; otherwise, the PUCCH transmission of smaller priority index is associated with the overlapping slot with $N_{\mathrm{sym}}^{\mathrm{slot}}$ symbols [4, TS 38.211] of larger priority index.<br>    - the UE first resolves the overlapping for PUCCH transmissions, where at least one of the PUCCH transmissions is with $N_{\mathrm{PUCCH}}^{\mathrm{repeat}} > 1$ repetitions, within a slot of larger priority index as is subsequently described in this clause, if any, and then the UE resolves the overlapping for PUCCH transmissions without repetitions within the slot using the pseudo-code in clause 9.2.5<br>    - if the UE determines that a first PUCCH transmission of the smaller priority index is not dropped and the UCI of the first PUCCH transmission is not multiplexed in a second PUCCH transmission of larger priority index in an overlapping slot with *subslotLengthForPUCCH* symbols, the first PUCCH transmission is associated with the next overlapping slot with *subslotLengthForPUCCH* symbols for PUCCH transmissions with the larger priority index<br>    - the UE does not expect a PUCCH transmission that includes UCI of different priority indexes to overlap with a PUCCH transmission with $N_{\mathrm{PUCCH}}^{\mathrm{repeat}} > 1$ repetitions after resolving the overlapping for PUCCH transmissions without repetitions within a slot<br>    - the UE does not expect a PUCCH transmission with UCI of first and second priority indexes to overlap with a PUCCH transmission with HARQ-ACK information of the first priority index, or with a PUCCH transmission or with a PUSCH transmission of the second priority index when the second priority index is larger than the first priority index |

(continued)

| |
|---|
| - the UE does not expect a PUCCH transmission with HARQ-ACK information of larger priority index to overlap with more than one PUCCH transmissions with HARQ-ACK information of smaller priority index |
| - third, the UE resolves the overlapping for PUCCH and PUSCH transmissions of different priority indexes |
|     - the UE drops PUSCH transmissions of smaller priority index that overlap with a PUCCH transmission with positive SR of larger priority index prior to multiplexing UCI in a PUSCH transmission of smaller priority index, if any |
|     - the UE drops PUSCH transmissions of smaller priority index that overlap with a PUCCH transmission with $N_{\text{PUCCH}}^{\text{repeat}} > 1$ repetitions of larger priority index prior to multiplexing UCI in a PUSCH transmission of smaller priority index, if any |
|     - the UE multiplexes HARQ-ACK information in a PUSCH transmission, as is subsequently described in this clause for multiplexing HARQ-ACK information from a PUCCH transmission in a PUSCH transmission of a same priority index, if a PUCCH transmission with HARQ-ACK information of a first priority index overlaps with one or more PUSCH transmissions of a second priority index that is different than the first priority index |

[Table 8]

| |
|---|
| - if // this is for cases the UE supports multiplexing information of different priorities in a PUCCH/PUSCH transmission |
|     - a PUCCH transmission with HARQ-ACK information, without repetitions, with smaller priority index overlaps with a PUCCH transmission only with HARQ-ACK information, without repetitions, with larger priority index, or |
|     - a PUCCH transmission without repetitions that includes HARQ-ACK information of smaller priority index overlaps with a PUCCH transmission without repetitions using a PUCCH resource with PUCCH format 2/3/4 with HARQ-ACK information and SR of larger priority index, or |
|     - a PUCCH transmission with HARQ-ACK information, without repetitions, with smaller or larger priority index overlaps, respectively, with a PUSCH transmission with larger or smaller priority index the UE |
|     - multiplexes HARQ-ACK information of different priority indexes and SR information of larger priority index, if any, in a same PUCCH transmission of larger priority index, or multiplexes HARQ-ACK information the UE would provide in a PUCCH transmission of smaller or larger priority index in a PUSCH transmission of larger or smaller priority index, respectively, and applies the procedures in clause 9.2.5.3 or 9.3, respectively, and |
|     - drops CSI and/or SR carried in the PUCCH of smaller priority index, if any |
|     - drops HARQ-ACK information of smaller priority index if the UE would multiplex the HARQ-ACK information of smaller priority index in a PUSCH where the UE multiplexes Part 1 CSI reports and Part 2 CSI reports of larger priority index |
|     - drops Part 2 CSI reports of smaller priority index if the UE would multiplex the HARQ-ACK information of smaller and larger priority indexes in a PUSCH where the UE multiplexes Part 1 CSI reports and Part 2 CSI reports of smaller priority index |
| - else |
|     - if the UE would transmit the following channels that would overlap in time where, if a channel transmission is with repetitions, the following are applicable per repetition |
|         - a first PUCCH transmission of larger priority index and a second PUCCH transmission of smaller priority index |
|         - a first PUCCH transmission of larger priority index and a second PUSCH transmission of smaller priority index when the UE cannot simultaneously transmit the first PUCCH and second PUSCH |
|         - a first PUCCH transmission of smaller priority index and a second PUSCH transmission of larger priority index when the UE cannot simultaneously transmit the first PUCCH and second PUSCH the UE |
|     - transmits the PUCCH or the PUSCH of the larger priority index, and |
|     - does not transmit a PUCCH or a PUSCH of smaller priority index |

When the UE determines overlapping for PUCCH and/or PUSCH transmissions with different priority indices other than PUCCH transmissions with SL HARQ-ACK reports, before considering the limitations on transmissions, including repetitions if any, as described in clauses 11.1 and 11.1.1 of 3GPP TS 38.213, if the UE is not provided with the RRC parameter *UCI-MuxWithDifferentPriority,* the UE first resolves overlapping for PUCCH and/or PUSCH transmissions with lower priority indices as described in clauses 9.2.5 and 9.2.6 of 3GPP TS 38.213. Thereafter, a UE procedure may be performed according to the following table.

[Table 9]

| |
|---|
| - if a transmission of a first PUCCH of larger priority index scheduled by a DCI format in a PDCCH reception would overlap in time with a repetition of a transmission of a second PUSCH or a second PUCCH of smaller priority index, the UE cancels the repetition of a transmission of the second PUSCH or the second PUCCH before the first symbol that would overlap with the first PUCCH transmission |
| - if a transmission of a first PUSCH of larger priority index scheduled by a DCI format in a PDCCH reception would overlap in time with a repetition of the transmission of a second PUCCH of smaller priority index, the UE cancels the repetition of the transmission of the second PUCCH before the first symbol that would overlap with the first PUSCH transmission |
| where |
| - the overlapping is applicable before or after resolving overlapping among channels of larger priority index, if any, as described in clauses 9.2.5 and 9.2.6 |
| - any remaining PUCCH and/or PUSCH transmission after overlapping resolution is subjected to the limitations for UE transmission as described in clause 11.1 and clause 11.1.1 |
| - the UE expects that the transmission of the first PUCCH or the first PUSCH, respectively, would not start before $T_{proc,2}$ after a last symbol of the corresponding PDCCH reception |
| - $T_{proc,2}$ is the PUSCH preparation time for a corresponding UE processing capability assuming $d_{2,1} = d_1$ [6, TS 38.214], based on $\mu$ and $N_2$ as subsequently defined in this clause, and $d_1$ is determined by a reported UE capability |
| If a UE is scheduled by a DCI format in a first PDCCH reception to transmit a first PUCCH or a first PUSCH of larger priority index that overlaps with a second PUCCH or a second PUSCH transmission of smaller priority index that, if any, is scheduled by a DCI format in a second PDCCH |
|    - $T_{proc,2}$ is based on a value of $\mu$ corresponding to the smallest SCS configuration of the first PDCCH, the second PDCCHs, the first PUCCH or the first PUSCH, and the second PUCCHs or the second PUSCHs |
|       - if the overlapping group includes the first PUCCH |
|          - if *processingType2Enabled* of *PDSCH-ServingCellConfig* is set to *enable* for the serving cell where the UE receives the first PDCCH and for all serving cells where the UE receives the PDSCHs corresponding to the second PUCCHs, and if *processingType2Enabled* of *PUSCH-ServingCellConfig* is set to *enable* for the serving cells with the second PUSCHs, $N_2$ is 5 for $\mu = 0$, 5.5 for $\mu = 1$ and 11 for $\mu = 2$ |
|          - else, $N_2$ is 10 for $\mu = 0$, 12 for $\mu = 1$, 23 for $\mu = 2$, 36 for $\mu = 3$, 144 for $\mu = 5$, and 288 for $\mu = 6$; |
|       - if the overlapping group includes the first PUSCH |
|          - if *processingType2Enabled* of *PUSCH-ServingCellConfig* is set to *enable* for the serving cells with the first PUSCH and the second PUSCHs and if *processingType2Enabled* of *PDSCH-ServingCellConfig* is set to *enable* for all serving cells where the UE receives the PDSCHs corresponding to the second PUCCHs, $N_2$ is 5 for $\mu = 0$, 5.5 for $\mu = 1$ and 11 for $\mu = 2$ |
|          - else, $N_2$ is 10 for $\mu = 0$, 12 for $\mu = 1$, 23 for $\mu = 2$, 36 for $\mu = 3$, 144 for $\mu = 5$, and 288 for $\mu = 6$; |
| If a UE would transmit the following channels, including repetitions if any, that would overlap in time |
|    - a first PUCCH of larger priority index with SR and a second PUCCH or PUSCH of smaller priority index, or |
|    - a configured grant PUSCH of larger priority index and a PUCCH of smaller priority index, or |
|    - a first PUCCH of larger priority index with HARQ-ACK information only in response to PDSCH(s) reception without corresponding PDCCH(s) and a second PUCCH of smaller priority index with HARQ-ACK information only in response to PDSCH(s) reception without corresponding PDCCH(s), or a second PUCCH of smaller priority index with SR and/or CSI, or a configured grant PUSCH with smaller priority index, or a PUSCH of smaller priority index with SP-CSI report(s) without a corresponding PDCCH, or |
|    - a PUSCH of larger priority index with SP-CSI reports(s) without a corresponding PDCCH and a PUCCH of smaller priority index with SR, or CSI, or HARQ-ACK information only in response to PDSCH(s) reception without corresponding PDCCH(s), or |
|    - a configured grant PUSCH of larger priority index and a configured grant PUSCH of smaller priority index on a same serving cell |
|    - a PUSCH of smaller priority index scheduled by a DCI format and a configured grant PUSCH of larger priority index on a same serving cell if the UE is provided *prioritizationBetweenLP-DG-PUSCHandHP-CG-PUSCH* |

(continued)

the UE is expected to cancel a repetition of the PUCCH/PUSCH transmissions of smaller priority index before the first symbol overlapping with the PUCCH/PUSCH transmission of larger priority index if the repetition of the PUCCH/PUSCH transmissions of smaller priority index overlaps in time with the PUCCH/PUSCH transmissions of larger priority index. In case of a PUSCH of larger priority index scheduled by a DCI format in a PDCCH reception and a configured grant PUSCH of smaller priority index on a same serving cell and the UE is provided *prioritizationBetweenHP-DG-PUSCHandLP-CG-PUSCH*

- the UE expects that the transmission of the PUSCH of larger priority index would not start before $T_{proc,2}$ after a last symbol of the corresponding PDCCH reception

- $T_{proc,2}$ is the PUSCH preparation time for a corresponding UE processing capability assuming $d_{2,1} = d_1 + d_3$ [6, TS 38.214], based on $\mu$ and $N_2$ as subsequently defined in this clause, and $d_1$ and $d_3$ are determined by a reported UE capability

The following tables show the UE procedure for reporting UCI extracted from 3GPP TS 38.213 V17.1.0. Details may be found in 3GPP TS 38.213 V17.1.0

[Table 10]

When a UE determines overlapping for PUCCH transmissions with SL HARQ-ACK reports and PUSCH of smaller priority index, including repetitions if any, after resolving the overlapping PUCCH other than PUCCH transmissions with SL HARQ-ACK reports and/or PUSCH transmissions, if the PUSCH includes no UCI, the UE resolves the overlapping for PUCCH transmissions with SL HARQ-ACK reports and PUSCH of smaller priority index as described in clauses 9.2.5 and 9.2.6.

When a UE determines overlapping for PUCCH transmissions with SL HARQ-ACK reports and PUSCH of larger priority index only, including repetitions if any, after resolving the overlapping PUCCH other than PUCCH transmissions with SL HARQ-ACK reports and/or PUSCH transmissions, the UE does not transmit the PUCCH with SL HARQ-ACK reports

where

- the UE expects that the transmission of the PUSCH would not start before $T_{proc,2} + d_1$ after a last symbol of the corresponding PDCCH reception;

- $T_{proc,2}$ is the PUSCH preparation time for a corresponding UE processing capability assuming $d_{2,1} = 0$ [6, TS 38.214], based on $\mu$ and $N_2$ as subsequently defined in this clause, and $d_1$ is determined by a reported UE capability.

The UE expects the PUCCH and PUSCH transmissions to fulfill the conditions in clause 9 and clause 9.2.5 for UCI multiplexing replacing the reference time of "end of PDSCH" with "end of the last symbol of a last PSFCH reception occasion" as described in 16.5 and $T_{proc,1}$ with $T_{prep}$.

A UE does not expect that a PUCCH carrying SL HARQ-ACK reports overlaps with PUSCH with aperiodic or semi-persistent CSI reports.

A UE does not expect to be scheduled to transmit a PUCCH or a PUSCH with smaller priority index that would overlap in time with a PUCCH of larger priority index with HARQ-ACK information only in response to a PDSCH reception without a corresponding PDCCH unless the UE is provided *UCI-MuxWithDifferentPriority*. A UE does not expect to be scheduled to transmit a PUCCH of smaller priority index that would overlap in time with a PUSCH of larger priority index with SP-CSI report(s) without a corresponding PDCCH unless the UE is provided *UCI-MuxWithDifferentPriority*.

[Table 11]

When a UE determines overlapping for PUCCH transmissions with SL HARQ-ACK reports and PUSCH of smaller priority index, including repetitions if any, after resolving the overlapping PUCCH other than PUCCH transmissions with SL HARQ-ACK reports and/or PUSCH transmissions, if the PUSCH includes no UCI, the UE resolves the overlapping for PUCCH transmissions with SL HARQ-ACK reports and PUSCH of smaller priority index as described in clauses 9.2.5 and 9.2.6.

When a UE determines overlapping for PUCCH transmissions with SL HARQ-ACK reports and PUSCH of larger priority index only, including repetitions if any, after resolving the overlapping PUCCH other than PUCCH transmissions with SL HARQ-ACK reports and/or PUSCH transmissions, the UE does not transmit the PUCCH with SL HARQ-ACK reports where

(continued)

| |
|---|
| - the UE expects that the transmission of the PUSCH would not start before $T_{proc,2} + d_1$ after a last symbol of the corresponding PDCCH reception;<br>- $T_{proc,2}$ is the PUSCH preparation time for a corresponding UE processing capability assuming $d_{2,1} = 0$ [6, TS 38.214], based on $\mu$ and $N_2$ as subsequently defined in this clause, and $d_1$ is determined by a reported UE capability. |
| The UE expects the PUCCH and PUSCH transmissions to fulfill the conditions in clause 9 and clause 9.2.5 for UCI multiplexing replacing the reference time of "end of PDSCH" with "end of the last symbol of a last PSFCH reception occasion" as described in 16.5 and $T_{proc,1}$ with $T_{prep}$. |
| A UE does not expect that a PUCCH carrying SL HARQ-ACK reports overlaps with PUSCH with aperiodic or semi-persistent CSI reports. |
| A UE does not expect to be scheduled to transmit a PUCCH or a PUSCH with smaller priority index that would overlap in time with a PUCCH of larger priority index with HARQ-ACK information only in response to a PDSCH reception without a corresponding PDCCH unless the UE is provided *UCI-MuxWithDifferentPriority*. A UE does not expect to be scheduled to transmit a PUCCH of smaller priority index that would overlap in time with a PUSCH of larger priority index with SP-CSI report(s) without a corresponding PDCCH unless the UE is provided *UCI-Mux-WithDifferentPriority*. |

[Table 12]

| |
|---|
| If a UE multiplexes aperiodic CSI in a PUSCH and the UE would multiplex UCI that includes HARQ-ACK information in a PUCCH that overlaps with the PUSCH and the timing conditions for overlapping PUCCHs and PUSCHs in clause 9.2.5 are fulfilled, the UE multiplexes only the HARQ-ACK information in the PUSCH and does not transmit the PUCCH. |
| If a UE transmits multiple PUSCHs in a slot on respective serving cells that include first PUSCHs that are scheduled by DCI formats and second PUSCHs configured by respective *ConfiguredGrantConfig* or *semiPersistentOn-PUSCH,* and the UE would multiplex UCI in one of the multiple PUSCHs, and the multiple PUSCHs fulfil the conditions in clause 9.2.5 for UCI multiplexing, the UE multiplexes the UCI in a PUSCH from the first PUSCHs. |
| If a UE transmits multiple PUSCHs in a slot on respective serving cells and the UE would multiplex UCI in one of the multiple PUSCHs and the UE does not multiplex aperiodic CSI in any of the multiple PUSCHs, the UE multiplexes the UCI in a PUSCH of the serving cell with the smallest *ServCellIndex* subject to the conditions in clause 9.2.5 for UCI multiplexing being fulfilled. If the UE transmits more than one PUSCHs in the slot on the serving cell with the smallest *ServCellIndex* that fulfil the conditions in clause 9.2.5 for UCI multiplexing, the UE multiplexes the UCI in the earliest PUSCH that the UE transmits in the slot. |
| If a UE transmits a PUSCH over multiple slots and the UE would transmit a PUCCH with HARQ-ACK and/or CSI information over a single slot that overlaps with the PUSCH transmission in one or more slots of the multiple slots, and the PUSCH transmission in the one or more slots fulfills the conditions in clause 9.2.5 for multiplexing the HARQ-ACK and/or CSI information, the UE multiplexes the HARQ-ACK and/or CSI information in the PUSCH transmission in the one or more slots. The UE does not multiplex HARQ-ACK and/or CSI information in the PUSCH transmission in a slot from the multiple slots if the UE would not transmit a single-slot PUCCH with HARQ-ACK and/or CSI information in the slot in case the PUSCH transmission was absent. |
| If a UE transmits a PUSCH with repetition Type B and the UE would transmit a PUCCH with HARQ-ACK and/or CSI information over a single slot that overlaps with the PUSCH transmission in one or more slots, the UE expects all actual repetitions of the PUSCH transmission [6, TS 38.214] that would overlap with the PUCCH transmission to fulfill the conditions in clause 9.2.5 for multiplexing the HARQ-ACK and/or CSI information, and the UE multiplexes the HARQ-ACK and/or CSI information in the earliest actual PUSCH repetition of the PUSCH transmission that would overlap with the PUCCH transmission and includes more than one symbol. The UE does not expect that all actual repetitions that would overlap with the PUCCH transmission do not include more than one symbol. |
| If the PUSCH transmission over the multiple slots is scheduled by a DCI format that includes a DAI field, the value of the DAI field is applicable for multiplexing HARQ-ACK information in the PUSCH transmission in any slot from the multiple slots where the UE multiplexes HARQ-ACK information. |

(continued)

When a UE would multiplex HARQ-ACK information in a PUSCH transmission that is configured by a *Configured-GrantConfig,* and includes CG-UCI [5, TS 38.212], the UE multiplexes the HARQ-ACK information in the PUSCH transmission if the UE is provided *cg-UCI-Multiplexing*; otherwise, if the HARQ-ACK information and the PUSCH have same priority index, the UE does not transmit the PUSCH and multiplexes the HARQ-ACK information in a PUCCH transmission or in another PUSCH transmission; if the HARQ-ACK information and the PUSCH have different priority indexes, the UE does not transmit the channel with the smaller priority index.

In conventional NR, the BS may indicate or configure to the UE with two priorities: a low (lower) priority (LP) and a high (higher) priority (HP). The UE may then multiplex UL channels with the same priority together according to the indicated or configured priorities. The UE may perform additional UL multiplexing between PUCCH(s) and/or groups of PUCCH(s) that overlap in time with different priorities or prioritize the transmission of one group while dropping other groups. This series of operations may include UL multiplexing operations described in 3GPP TS 38.213 V17.1.0 (e.g., Tables 7 to 12).

To use additional services such as XR, it may be considered to include an indicator that specifies the traffic of services or additional priorities in a scheduling message. For example, at least one of the following may be used.

> Method 1: A specific CG/SPS configuration may be indicated or configured for the additional services/priorities. The CG/SPS configuration may include an RRC parameter flag to indicate that the configuration is intended for the additional services/priorities. Alternatively, activation DCI that activates CG/SPS resources may include an indicator representing the additional services. To include the indicator in the activation DCI, the following method(s) may be additionally used.

> Method 2: Scheduling through a specific DCI format may be assumed to be scheduling for the additional services/priorities. To specify such a DCI format, RRC parameter(s) related to the DCI format for scheduling the additional services/priorities can be provided from the BS to the UE.

> Method 3: If transmission is scheduled by a DCI format CRC-scrambled with a specific RNTI, it may be assumed that the transmission is for the additional services/priorities. To specify such an RNTI, RRC parameter(s) related to the RNTI for scheduling the additional services/priorities may be provided from the BS to the UE.

> Method 4: If transmission is scheduled by a PDCCH detected in a specific search space, it may be assumed that the transmission is for the additional services/priorities. To specify such a search space, RRC parameter(s) related to the search space for scheduling the additional services/priorities may be provided from the BS to the UE.

> Method 5: If transmission is scheduled for a specific HARQ process, it may be assumed that the transmission is for the additional services/priorities. To specify such a HARQ process, an RRC parameter related to the HARQ process for scheduling the additional services/priorities may be provided from the BS to the UE.

> Method 6: It may be indicated by a field in DCI that the transmission scheduled by the DCI is for the additional services/priorities. Such a field may be added as a new DCI field in the DCI, or an existing DCI field (e.g., priority indicator field) may be extended to be used as the field.

The above methods may be applied to the UE individually or in combination. For example, the UE and BS may configure a specific DCI format and a specific RNTI and assume that the additional services/priorities are used only when the CRC of the corresponding DCI format is scrambled with the RNTI. The specific DCI format may be configured by the BS to the UE, and the UE may determine which service is used based on a new DCI field or priority indicator field in the DCI format.

**\* Implementation 1-1: Service-Specific UE Behavior**

In applying Implementation 1, when the UE receives radio resource scheduling, the UE may distinguish whether the corresponding scheduling is intended for additional services/priorities. If the UE receives a scheduling message including an indicator representing the traffic of a specific service, the UE may assume or expect that radio resources allocated by the scheduling message may contain user data for the corresponding service/priority. Based on the value of such an indicator, the UE may perform or may not perform specific UE operations and may treat and process radio resources with the same indicator value as having the same priority. For example, the following may be considered.

> Method 1: The UE may assume that scheduling indicating a specific service or priority is not affected by an interrupted transmission indication and/or cancelation instruction. The interrupted transmission indication and/or cancelation indication each indicate a radio resource region through group-common signaling as described in clauses 11.2 and 11.2A of 3GPP TS 38.213 V17.1. The indication may be signaling that cancels (scheduled) transmission on other radio resources overlapping with the indicated radio resource region or redefines DL reception such that nothing is transmitted on the indicated radio resource region.

>> For example, the UE may be configured with a specific service/priority, which is not affected by the interrupted transmission instruction and/or cancelation indication, through higher layer signaling from the BS. When the UE receives the group-common signaling as well as a scheduling message for the specific service/priority that is not affected thereby, the UE may ignore the group-common signaling (e.g., DCI including the interrupted transmission indication and/or DCI including the cancelation indication) for radio resources indicated by the scheduling message. For instance, even if the radio resource region indicated or determined by the interrupted transmission indication and/or cancelation indication overlaps with the radio resources indicated by the scheduling message, the UE may not cancel UL radio resources indicated by the scheduling message or may not redefine reception on DL radio resources indicated by the scheduling message.

> Method 2: The UE may assume that scheduling indicating a specific service or priority may override an already scheduled HARQ process, regardless of the time of receiving the scheduling. In the conventional NR system, to reduce the implementation complexity of the UE, the UE does not expect to receive different PDSCH scheduling for the same HARQ process until reception of a scheduled PDSCH is completed with transmission of a HARQ-ACK. In other words, in the conventional NR system, the UE is not expected to encounter HARQ process collisions. Additionally, even for different HARQ processes, the UE does not expect to transmit a HARQ-ACK for a PDSCH received later before transmitting a HARQ-ACK for another PDSCH that is received earlier. Thus, in the conventional NR system, the UE does not expect out-of-order scheduling. According to Method 2, such constraints may be relaxed for only a specific HARQ process, thereby securing flexibility in scheduling while minimizing an increase in the implementation complexity of the UE

>> The UE may report to the BS the maximum number of HARQ processes for which HARQ process collisions and out-of-order scheduling are allowed in the form of capability signaling regardless of scheduling of other PDSCHs.

>> The BS may preconfigure, through higher layer signaling (e.g., RRC signaling), a HARQ process number (i.e., HARQ process ID) or a group of HARQ process numbers for which the UE may freely override scheduling, that is, HARQ process collisions and out-of-order scheduling are allowed.

If a HARQ process collision occurs between a plurality of scheduled PDSCHs for HARQ process(es) where HARQ process collisions and out-of-order scheduling are allowed, the UE may prioritize receiving a later-scheduled PDSCH or prioritize transmitting a HARQ-ACK associated with the PDSCH.

If out-of-order scheduling occurs between HARQ process(es) where HARQ process collisions and out-of-order scheduling are allowed and other HARQ process, the UE may prioritize receiving the HARQ process(es) where HARQ process collisions and out-of-order scheduling are allowed or prioritize transmitting a HARQ-ACK associated with the HARQ process(es).

**\* Implementation 2: UL Multiplexing with Multi-Level Service/Priority Indicator**

In applying Implementation 1, when the UE receives radio resource scheduling, the UE may distinguish whether the corresponding scheduling is intended for additional services/priorities. If the UE receives a scheduling message including an indicator representing the traffic of a specific service, the UE may assume or expect that radio resources allocated by the scheduling message may contain user data for the corresponding service/priority. Based on the value of the indicator, the UE may perform UL multiplexing operations.

As described in clause 9 of 3GPP TS 38.213 V17.1.0, the BS may indicate or configure to the UE with two priorities: a low (lower) priority (LP) and a high (higher) priority (HP). The UE may perform UL multiplexing operations by considering each priority. In the present disclosure, UL multiplexing operations not only include the method of transmitting a single channel by multiplexing a plurality of PUSCHs/PUCCHs that overlap in time as described in clause 9 of 3GPP TS 38.213 V17.1.0 (see Tables 7 to 12), but also the prioritization and multiplexing between PUSCHs/PUCCHs that overlap in time and have different priorities.

As in Implementation 1, when the UE is indicated or configured with a plurality of priorities and receives PDSCH/PUSCH/PUCCH scheduling associated with each priority, the UE may be additionally indicated or configured with a third priority that is neither a low (lower) priority (LP) nor a high (higher) priority (HP). When such a third priority is indicated or configured, the UE may consider one of the following methods to perform UL multiplexing operations in a given slot.

> Method 1: The UE may assume that a PUSCH/PUCCH associated with the third priority is associated with another priority, such as an LP or HP, and perform UL multiplexing operations.

>> In this case, the priority assumed to be associated with the PUSCH/PUCCH may be determined based on the priorities of other transmissions present in the same slot. For example, if a third-priority PUSCH/PUCCH and an LP PUSCH/PUCCH are scheduled in the same slot, the third-priority PUSCH/PUCCH may be considered as an HP PUSCH/PUCCH. Similarly, if the third-priority PUSCH/PUCCH and the HP PUSCH/PUCCH are scheduled in the same slot, the third-priority PUSCH/PUCCH may be considered as the LP PUSCH/PUCCH. Accordingly, the UE may prioritize the third priority over the LP and prioritize the HP over the third priority. In another example, if the third-priority PUSCH/PUCCH and the LP PUSCH/PUCCH are scheduled in the same slot, the UE may consider the third-priority PUSCH/PUCCH as the LP PUSCH/PUCCH. Similarly, if the third-priority PUSCH/PUCCH and the HP PUSCH/PUCCH are scheduled in the same slot, the UE may consider the third-priority PUSCH/PUCCH as the HP PUSCH/PUCCH. Accordingly, a third-priority UL channel may be easily multiplexed with PUSCHs/PUCCHs associated with other priorities (i.e., LP or HP).

>> Alternatively, the priority assumed to be associated with the PUSCH/PUCCH may be determined based on the priorities of other transmissions capable of participating in UL multiplexing. For example, if a third-priority PUSCH/PUCCH and an LP or HP PUCCH are scheduled to overlap in time, the UE may consider the third-priority PUSCH/PUCCH as an LP or HP PUSCH/PUCCH. In another example, if the third-priority PUSCH/PUCCH and an LP or HP PUSCH are scheduled to overlap in time, the UE may consider the third-priority PUSCH/PUCCH as the LP or HP PUSCH/PUCCH. In another example, if the third-priority CG PUSCH or an SPS HARQ-ACK PUCCH are scheduled to overlap in time with the LP or HP PUCCH/PUSCH, the UE may consider the third-priority PUSCH/PUCCH as an LP PUSCH/PUCCH.

>> If there are no UL channels that have other priorities and are scheduled in the same slot as the third-priority UL channel, the UE may assume that the third priority is associated with either the LP or HP and perform UL multiplexing operations. Which one of the LP and HP is used may be predefined or determined through L1 signaling (e.g., DCI) and/or higher layer signaling from the BS.

>> Alternatively, the UE may assume that the third priority is associated with either the LP or HP based on the type of channel or the type of information carried on the channel and perform UL multiplexing operations. For example, the UE may assume the LP for a PUSCH carrying an uplink shared channel (UL-SCH) data, assume the HP for a PUSCH/PUCCH carrying UCI, assume the HP for both the PUSCH and PUSCH/PUCCH, and then perform UL multiplexing. In another example, the UE may assume the HP for a channel carrying a HARQ-ACK, assume the LP for others, and perform UL multiplexing. In another example, the UE may assume the HP for a channel carrying a HARQ-ACK or UL-SCH, assume the LP for others, and perform UL multiplexing.

>> Alternatively, the UE may assume that transmission is associated with either the LP or HP based on a HARQ process used for third-priority scheduling and perform UL multiplexing operations. For example, a set or range of HARQ processes may be configured through higher layer signaling from the BS. If the third-priority scheduling uses a HARQ process within the set or range, the transmission may be assumed as the HP, and other transmissions may be assumed as the LP. On the other hand, if the third-priority scheduling uses a HARQ process within the set or range, the transmission may be assumed as the LP, and other transmissions may be assumed as the LP. The set or range of HARQ process numbers may be configured separately for UL transmission and DL reception.

> Method 2: The UE may assume that a PDSCH/PUSCH/PUCCH associated with the third priority is associated with another priority, such as an LP or HP, which does not exist in the same slot and perform UL multiplexing operations.

>> In some implementations of the present disclosure, the UE assumes that up to two different priorities may be scheduled in a single slot. In other words, in some implementations of the present disclosure, the UE does not expect three or more different priorities to be scheduled in a single slot.

>> Alternatively, in some implementations, the UE may assume that the processing timelines of PUSCHs/PUCCHs with different priorities may overlap in time by up to two. In other words, the UE does not expect the processing timelines of PUSCHs/PUCCHs with different priorities to be scheduled to overlap by three or more in time.

>> In some implementations, when the UE intends to transmit multiple overlapping PUCCHs or overlapping PUCCH(s) and PUSCH(s) within the slot, the PUSCH/PUCCH processing timeline may refer to the time interval between i) a first symbol $S_0$ of the earliest PUCCH or PUSCH among a group of overlapping PUCCHs and PUSCHs within the slot and ii) the last symbol of any PDCCH with a DCI format that schedules the overlapping PUSCHs, any PDCCH with a DCI format having HARQ-ACK information for the overlapping PUCCHs within the slot, and/or any corresponding PDSCH, as described in clause 9.2.5 of 3GPP TS 38.214.

>> If a third-priority PUSCH/PUCCH and an LP PUSCH/PUCCH are scheduled in the same slot, the UE may consider the third-priority PUSCH/PUCCH as an HP PUSCH/PUCCH. Similarly, if the third-priority PUSCH/PUCCH and the HP PUSCH/PUCCH are scheduled in the same slot, the UE may consider the third-priority PUSCH/PUCCH as the LP PUSCH/PUCCH. That is, the third-priority may be prioritized over the LP, and the HP may be prioritized over the third priority.

>> If there are no transmissions that have other priorities and are scheduled in the same slot as the third-priority transmission, the UE may assume that the third-priority transmission is associated with either the LP or HP and perform UL multiplexing operations. Which one of the LP and HP is used may be predefined or determined through L1 signaling (e.g., DCI) and/or higher layer signaling from the BS.

> Method 3: The UE may perform UL multiplexing operations by considering a PDSCH/PUSCH/PUCCH associated with the third priority scheduled in a slot together with transmission(s) with other priorities such as an LP or HP. Transmissions associated with priorities for which UL multiplexing operations are not performed may be dropped.

>> In some implementations, the UE may consider only two high priorities in a single slot. In this case, the third priority may be assumed to be higher than the LP but lower than the HP.

>> In some implementations, while performing UL multiplexing, the UE may assume that the higher of two priorities is the LP and the lower priority is the HP until the UE obtains the result of the UL multiplexing. The priority of the result of the UL multiplexing may be considered as the higher (or lower) of the two priorities, or the priority may be determined as the priority of a PUSCH if the PUSCH is included in the multiplexing.

>> In some implementations, the UE may consider the processing timelines of the PDSCH/PUSCH/PUCCH within the slot and then perform UL multiplexing operations by considering two priorities, each having the earliest start of the PUSCH/PUCCH processing timelines.

>> In some implementations, when the UE intends to transmit multiple overlapping PUCCHs or overlapping PUCCH(s) and PUSCH(s) within the slot, the PUSCH/PUCCH processing timeline may refer to the time interval between i) a first symbol $S_0$ of the earliest PUCCH or PUSCH among a group of overlapping PUCCHs and PUSCHs within the slot and ii) the last symbol of any PDCCH with a DCI format that schedules the overlapping PUSCHs, any PDCCH with a DCI format having HARQ-ACK information for the overlapping PUCCHs within the slot, and/or any corresponding PDSCH, as described in clause 9.2.5 of 3GPP TS 38.214.

>> In some implementations, when the LP and the third priority are multiplexed, the UE may assume the third priority as the HP. Similarly, when the third priority and the HP are multiplexed, the UE may assume the third priority as the LP. After these assumptions, the UE may perform UL multiplexing according to the method described in 3GPP TS 38.213.

> Method 4: The UE may perform UL multiplexing operations between a PDSCH/PUSCH/PUCCH associated with the third priority and another priority, such as an LP or HP. The UE may then perform UL multiplexing again between the result of the corresponding UL multiplexing and another priority that is not considered in the corresponding multiplexing. The UE may repeat this operation until the UE performs UL multiplexing operations for all priorities.

>> Method 4 may be an extension of Method 3. For example, the UE may first perform UL multiplexing by considering only two high priorities within a slot. In this case, the third priority may be assumed to be higher than the LP but lower than the HP. In some implementations, the UE may attempt to perform UL multiplexing again between the result of the corresponding UL multiplexing and the highest priority among priorities not considered in the corresponding UL multiplexing. In some implementations, the UE may repeat this operation until the UE performs UL multiplexing operations for all priorities (i.e., down to the lowest priority)

>> In some implementations, UL multiplexing may be performed starting from lower priorities. For example, the UE may first perform UL multiplexing by considering only two lowest priorities within a slot. In this case, the third priority may be assumed to be higher than the LP but lower than the HP. In some implementations, the UE may attempt to perform UL multiplexing again between the result of the corresponding UL multiplexing and the lowest priority among priorities not considered in the corresponding UL multiplexing. In some implementations, the UE may repeat this operation until the UE performs UL multiplexing operations for all priorities (i.e., up to the highest priority).

>> In some implementations, while performing UL multiplexing, the UE may assume that the higher of two priorities is the LP and the lower priority is the HP until the UE obtains the result of the UL multiplexing is obtained. The priority of the result of the UL multiplexing may be considered as the higher (or lower) of the two priorities, or the priority may be determined as the priority of a PUSCH if the PUSCH is included in the multiplexing.

When a plurality of third priorities are indicated or configured to the UE, the UE may determine the priorities between the third priorities based on the method of indicating and configuring the third priorities. For example, if the third priorities are indicated or configured through priority indices provided by a DCI field or an RRC parameter, the priorities between the third priorities may be determined by comparing the priority indices. In this case, a priority with a larger priority index may be considered as a higher priority. Alternatively, if the third priorities are determined by search spaces or HARQ process numbers, a third priority associated with a lower search space ID or a lower HARQ process number may be defined to have a higher priority.

According to Implementation 2, the UE may perform UL multiplexing between an LP PUSCH/PUCCH and a third-priority PUSCH/PUCCH or between the third-priority PUSCH/PUCCH and an HP PUSCH/PUCCH. Alternatively, the UE may perform UL multiplexing between the LP PUSCH/PUCCH and the HP PUSCH/PUCCH as in the prior art. To clarify the UL multiplexing operations between different priorities, the parameter *UCI-MuxWithDifferentPriority* that determines prioritization or multiplexing between different priorities may be configured separately for each combination of priorities. For example, if the UE is configured with the third priority besides the LP and HP, the UE may be configured with the parameter *UCI-MuxWithDifferentPriority* for each of the following cases: UL multiplexing between the LP PUSCH/PUCCH and the third-priority PUSCH/PUCCH, UL multiplexing between the third priority PUSCH/PUCCH and the HP PUSCH/-PUCCH, and UL multiplexing between the LP PUSCH/PUCCH and the HP PUSCH/PUCCH as in the prior art. When the UE is configured with the parameter *UCI-MuxWithDifferentPriority* for each case, the UE may perform UL multiplexing operations based on the value of the corresponding parameter while performing the UL multiplexing as described in 3GPP TS 38.213. While performing UL the multiplexing, the UE may consider the third priority as either the LP or HP according to Methods 1 to 4 described above until the result of the UL multiplexing is obtained.

The priority of the result of UL multiplexing may be considered as the higher (or lower) of two priorities considered in the UL multiplexing. Alternatively, if a PUSCH is included in the multiplexing, the priority may be determined by the priority of the PUSCH. The result of the UL multiplexing may be considered as the higher priority of the two priorities.

**\* Proposed Technique 3: PUCCH Resource Determination for Multi-Level Service/Priority**

In applying Implementation 2, a third priority may be considered as either an LP or HP, or the third priority may be considered as the LP or HP only during UL multiplexing. In the conventional system, the BS may configure RRC parameter(s) such as separate time domain resource allocation (TDRA) tables (e.g., *TimeDomainAllocationList* in an RRC configuration *PUSCH-config*) and PUCCH resource sets to allocate radio resources to the UE for each priority. To determine PUCCH/PUSCH resources to be used for the third priority, the following may be considered.

> Method 1: A separate PUCCH resource set for each third priority may be configured to the UE through higher layer signaling from the BS.
> Method 2: It may be assumed that PUSCH or PUCCH resources associated with a priority (e.g., LP or HP) used for multiplexing the third priority is used.

Similar methods may be applied to the construction of a HARQ-ACK codebook as well. In the conventional system, the UE configures (constructs) a HARQ-ACK codebook for each priority and provide HARQ-ACK information to the BS through HARQ-ACK PUCCH transmission. In some implementations of the present disclosure, at least one of the following may be considered to transmit a third-priority HARQ-ACK codebook.

> Method 1: To configure each third-priority HARQ-ACK codebook, the BS may configure a separate HARQ-ACK codebook type for each priority to the UE through higher layer signaling.
> Method 2: To configure each third-priority HARQ-ACK codebook, the UE and BS may assume that the HARQ-ACK codebook is configured based on a configuration associated with a priority (e.g., LP or HP) used for multiplexing the third priority.
>> If the HARQ-ACK codebook is configured using a Type-2 HARQ-ACK codebook, the UE may configure the Type-2 HARQ-ACK codebook by considering both the scheduling of priorities used for multiplexing the third priority and a total-DAI and/or counter-DAI used for the scheduling of the third priority.

According to some implementations of the present disclosure, the UE may receive a multi-level priority indicator from the BS and determine priorities based on the information. According to some implementations of the present disclosure, UL multiplexing operations for cases where three or more priorities are scheduled may be defined based on UE operations between two priorities. According to some implementations of the present disclosure, when transmissions with different priorities overlap in time, the transmissions may be appropriately handled. According to some implementations of the present disclosure, shorter transmission latency may be achieved through UL multiplexing.

FIG. 8 illustrates a flow of UL signal transmission at a UE according to some implementations of the present disclosure.

The UE may perform operations according to some implementations of the present disclosure in association with uplink signal transmission. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure. The computer program or the computer program product may be recorded in at least one computer-readable (non-transitory) storage medium and may include instructions that, when executed, cause (at least one processor) to perform operations according to some implementations of the present disclosure. In the UE, the processing device, the computer-readable (non-transitory) storage medium, and/or the computer program product, the operations include: receiving a DCI format scheduling first UL transmission on a cell (S801), wherein the first UL transmission has a third priority that is not related to a first priority index indicating an LP or a second priority index indicating an HP; determining a slot for the first UL transmission based on the DCI format (S803); based on the first UL transmission overlapping in time with second UL transmission related to the first priority index or the second priority index within the slot, multiplexing the first UL transmission onto a first UL channel by considering that a priority of the first UL transmission is equal to a priority of the second UL transmission (S805); and transmitting the first UL channel in the slot (S807).

In some implementations, the operations may include, based on the first UL transmission does not overlapping in time with UL transmission with a priority different from the priority of the first UL transmission within the slot, multiplexing the first UL transmission onto a second UL channel by considering that the priority of the first UL transmission is either the LP or the HP.

In some implementations, the operations may include further receiving information on a priority to be used for the third priority in a state where transmission of the third priority does not overlap in time with UL transmission having a different priority among the first priority and the second priority.

In some implementations, the operations may include: receiving a first resource configuration for the LP and a second resource configuration for the HP; based on the priority of the second UL transmission being the LP, determining resources of the first UL channel based on the first resource configuration; and based on the priority of the second UL transmission being the HP, determining resources of the second UL channel based on the second resource configuration.

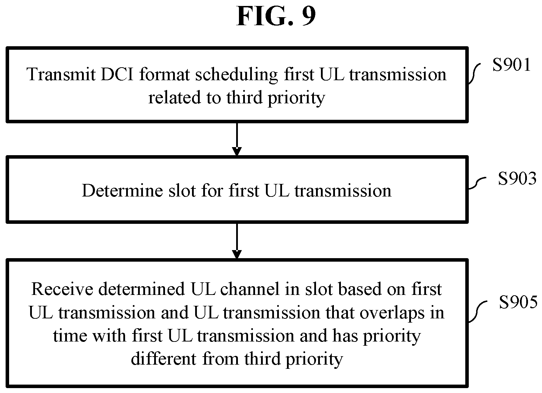

FIG. 9 illustrates a flow of UL signal reception at a BS according to some implementations of the present disclosure.

The BS may perform operations according to some implementations of the present disclosure in association with uplink signal reception. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure. In the BS, the processing device, the computer-readable (non-transitory) storage medium, and/or the computer program product, the operations include: transmitting a DCI format scheduling first UL transmission on a cell (S901), wherein the first UL transmission has a third priority that is not related to a first priority index indicating an LP or a second priority index indicating an HP; determining a slot for the first UL transmission based on the DCI format (S903); and based on the first UL transmission overlapping in time with second UL transmission related to the first priority index or the second priority index within the slot, receiving a first UL channel in the slot (S905), wherein the first UL channel is determined by considering that a priority of the first UL transmission is equal to a priority of the second UL transmission.

In some implementations, the operations may include, based on the first UL transmission does not overlapping in time with UL transmission with a priority different from the priority of the first UL transmission within the slot, receiving a second UL channel in the slot, wherein the second UL channel is determined by considering that the priority of the first UL transmission is either the LP or the HP

In some implementations, the operations may include transmitting information regarding a priority to be used for the third priority in a state where transmission of the third priority does not overlap in time with UL transmission having a different priority among the first priority and the second priority.

In some implementations, the operations may include: transmitting a first resource configuration for the LP and a second resource configuration for the HP; based on the priority of the second UL transmission being the LP, determining resources of the first UL channel based on the first resource configuration; and based on the priority of the second UL transmission being the HP, determining resources of the second UL channel based on the second resource configuration.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

**Claims**

1. A method of transmitting an uplink signal by a user equipment (UE) in a wireless communication system, the method comprising:

   receiving a downlink control information (DCI) format scheduling first uplink transmission on a cell, wherein the first uplink transmission has a third priority that is not related to a first priority index indicating a low priority or a second priority index indicating a high priority;
   determining a slot for the first uplink transmission based on the DCI format;
   based on the first uplink transmission overlapping in time with second uplink transmission related to the first priority index or the second priority index within the slot, multiplexing the first uplink transmission onto a first uplink channel by considering that a priority of the first uplink transmission is equal to a priority of the second uplink transmission; and
   transmitting the first uplink channel in the slot.

2. The method of claim 1, wherein based on the first uplink transmission not overlapping in time with uplink transmission with a priority different from the priority of the first uplink transmission within the slot, multiplexing the first uplink transmission onto a second uplink channel by considering that the priority of the first uplink transmission is either the low priority or the high priority.

3. The method of claim 2, further comprising:
   receiving information regarding a priority to be used for the third priority in a state where transmission of the third priority does not overlap in time with uplink transmission having a different priority among the first priority and the second priority.

4. The method of claim 2, comprising:

   receiving a first resource configuration for the low priority and a second resource configuration for the high priority;
   based on the priority of the second uplink transmission being the low priority, determining resources of the first uplink channel based on the first resource configuration; and
   based on the priority of the second uplink transmission being the high priority, determining resources of the second uplink channel based on the second resource configuration.

5. A user equipment (UE) configured to transmit an uplink signal in a wireless communication system, the UE comprising:

   at least one transceiver;
   at least one processor; and
   at least one computer memory operably connected to the at least one processor and storing instructions that, when executed, cause the at least one processor to perform operations comprising:

   receiving a downlink control information (DCI) format scheduling first uplink transmission on a cell, wherein the first uplink transmission has a third priority that is not related to a first priority index indicating a low priority or a second priority index indicating a high priority;
   determining a slot for the first uplink transmission based on the DCI format;
   based on the first uplink transmission overlapping in time with second uplink transmission related to the first priority index or the second priority index within the slot, multiplexing the first uplink transmission onto a first uplink channel by considering that a priority of the first uplink transmission is equal to a priority of the second uplink transmission; and

transmitting the first uplink channel in the slot.

6. A processing device in a wireless communication system, the processing device comprising:

at least one processor; and
at least one computer memory operably connected to the at least one processor and storing instructions that, when executed, cause the at least one processor to perform operations comprising:

receiving a downlink control information (DCI) format scheduling first uplink transmission on a cell, wherein the first uplink transmission has a third priority that is not related to a first priority index indicating a low priority or a second priority index indicating a high priority;
determining a slot for the first uplink transmission based on the DCI format;
based on the first uplink transmission overlapping in time with second uplink transmission related to the first priority index or the second priority index within the slot, multiplexing the first uplink transmission onto a first uplink channel by considering that a priority of the first uplink transmission is equal to a priority of the second uplink transmission; and
transmitting the first uplink channel in the slot.

7. A computer-readable storage medium configured to store at least one program code comprising instructions that, when executed, cause at least one processor to perform operations comprising:

receiving a downlink control information (DCI) format scheduling first uplink transmission on a cell, wherein the first uplink transmission has a third priority that is not related to a first priority index indicating a low priority or a second priority index indicating a high priority;
determining a slot for the first uplink transmission based on the DCI format;
based on the first uplink transmission overlapping in time with second uplink transmission related to the first priority index or the second priority index within the slot, multiplexing the first uplink transmission onto a first uplink channel by considering that a priority of the first uplink transmission is equal to a priority of the second uplink transmission; and
transmitting the first uplink channel in the slot.

8. A method of receiving, by a base station (BS), an uplink signal from a user equipment (UE) in a wireless communication system, the method comprising:

transmitting a downlink control information (DCI) format scheduling first uplink transmission on a cell, wherein the first uplink transmission has a third priority that is not related to a first priority index indicating a low priority or a second priority index indicating a high priority;
determining a slot for the first uplink transmission based on the DCI format; and
based on the first uplink transmission overlapping in time with second uplink transmission related to the first priority index or the second priority index within the slot, receiving a first uplink channel in the slot, wherein the first uplink channel is determined by considering that a priority of the first uplink transmission is equal to a priority of the second uplink transmission.

9. A base station (BS) configured to receive an uplink signal from a user equipment (UE) in a wireless communication system, the BS comprising:

at least one transceiver;
at least one processor; and
at least one computer memory operably connected to the at least one processor and storing instructions that, when executed, cause the at least one processor to perform operations comprising:

transmitting a downlink control information (DCI) format scheduling first uplink transmission on a cell, wherein the first uplink transmission has a third priority that is not related to a first priority index indicating a low priority or a second priority index indicating a high priority;
determining a slot for the first uplink transmission based on the DCI format; and
based on the first uplink transmission overlapping in time with second uplink transmission related to the first priority index or the second priority index within the slot, receiving a first uplink channel in the slot, wherein the first uplink channel is determined by considering that a priority of the first uplink transmission is equal to a priority of the second uplink transmission.

10. The BS of claim 9, wherein the operations comprise, based on the first uplink transmission not overlapping in time with uplink transmission with a priority different from the priority of the first uplink transmission within the slot, receiving a second uplink channel in the slot, and
wherein the second uplink channel is determined by considering that the priority of the first uplink transmission is either the low priority or the high priority.

11. The BS of claim 10, wherein the operations comprise transmitting information regarding a priority to be used for the third priority in a state where transmission of the third priority does not overlap in time with uplink transmission having a different priority among the first priority and the second priority.

12. The BS of claim 10, wherein the operations comprise:

transmitting a first resource configuration for the low priority and a second resource configuration for the high priority;
based on the priority of the second uplink transmission being the low priority, determining resources of the first uplink channel based on the first resource configuration; and
based on the priority of the second uplink transmission being the high priority, determining resources of the second uplink channel based on the second resource configuration.

# FIG. 1

<u>1</u>

# FIG. 2

# FIG. 3

# FIG. 4

| | One Frame (10ms) | |
|---|---|---|
| | Half-Frame (5ms) | Half-Frame (5ms) |
| | Subframe 0 (1ms) ... Subframe 4 (1ms) | Subframe 5 (1ms) ... Subframe 9 (1ms) |

Subframe (1ms)

| 15KHz | Slot (14 symbols) |

1ms

| 30KHz | Slot 0 (14 symbols) | Slot 1 |

500us

| 60KHz | Slot 0 (14 symbols) | Slot 1 | Slot 2 | Slot 3 |

250us

| 120KHz | Slot 0 (14 symbols) | Slot 1 | Slot 2 | Slot 3 | Slot 4 | Slot 5 | Slot 6 | Slot 7 |

125us

# FIG. 5

Resource grid

# FIG. 6

(a) Example of PDSCH time domain resource allocation

$K_0=0$, $S=7$, $L=7$, PDSCH Mapping Type B

$K_0=1$, $S=4$, $L=4$, PDSCH Mapping Type B

$K_0=2$, $S=1$, $L=9$, PDSCH Mapping Type A

Symbol containing DMRS      Symbol containing PDSCH

(b) Example of PUSCH time domain resource allocation

$K_2=1$, $S=2$, $L=10$, PUSCH Mapping Type B

$K_2=2$, $S=0$, $L=12$, PUSCH Mapping Type A

Symbol containing DMRS      Symbol containing PUSCH

# FIG. 7

DL assingment-to-PDSCH offset (K0)

PDSCH-to-HARQ-ACK reporting offset (K1)

# FIG. 8

Receive DCI format scheduling first UL transmission related to third priority — S801

Determine slot for first UL transmission — S803

Multiplex first UL transmission onto first UL channel based on first UL transmission and UL transmission that overlaps in time with first UL transmission and has priority different from third priority — S805

Transmit first UL channel in slot — S807

# FIG. 9

Transmit DCI format scheduling first UL transmission related to third priority  $\int$ S901

Determine slot for first UL transmission  $\int$ S903

Receive determined UL channel in slot based on first UL transmission and UL transmission that overlaps in time with first UL transmission and has priority different from third priority  $\int$ S905

# INTERNATIONAL SEARCH REPORT

| | International application No. |
|---|---|
| | **PCT/KR2023/005761** |

## A. CLASSIFICATION OF SUBJECT MATTER

**H04W 72/566**(2023.01)i; **H04W 72/12**(2009.01)i; **H04W 72/21**(2023.01)i; **H04W 72/23**(2023.01)i; **H04L 5/00**(2006.01)i; **H04L 1/18**(2006.01)i

According to International Patent Classification (IPC) or to both national classification and IPC

## B. FIELDS SEARCHED

Minimum documentation searched (classification system followed by classification symbols)

H04W 72/566(2023.01); H04L 5/00(2006.01); H04W 52/14(2009.01); H04W 72/04(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DCI, 우선순위(priority), 중첩(overlap), 상향링크(uplink)

## C. DOCUMENTS CONSIDERED TO BE RELEVANT

| Category* | Citation of document, with indication, where appropriate, of the relevant passages | Relevant to claim No. |
|---|---|---|
| Y<br><br>A | KR 10-2022-0045071 A (INTERDIGITAL PATENT HOLDINGS, INC.) 12 April 2022 (2022-04-12)<br>See paragraphs [0186]-[0190], [0212] and [0487]; and claims 1-20. | 1-2,5-10<br><br>3-4,11-12 |
| Y | KR 10-2022-0038774 A (SAMSUNG ELECTRONICS CO., LTD.) 29 March 2022 (2022-03-29)<br>See paragraphs [0050]-[0057]; and claims 1-15. | 1-2,5-10 |
| A | KR 10-2022-0016047 A (IDAC HOLDINGS, INC.) 08 February 2022 (2022-02-08)<br>See paragraphs [0152]-[0153]; and claims 1-20. | 1-12 |
| A | US 2021-0306120 A1 (GUANGDONG OPPO MOBILE TELECOMMUNICATIONS CORP., LTD.) 30 September 2021 (2021-09-30)<br>See paragraphs [0048]-[0090]; and claims 1-20. | 1-12 |
| A | US 2020-0267700 A1 (QUALCOMM INCORPORATED) 20 August 2020 (2020-08-20)<br>See paragraphs [0208]-[0215]; and claims 1-30. | 1-12 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 July 2023** | **24 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | International application No.<br>**PCT/KR2023/005761** |
|---|---|---|

| Patent document<br>cited in search report | | | Publication date<br>(day/month/year) | Patent family member(s) | | | Publication date<br>(day/month/year) |
|---|---|---|---|---|---|---|---|
| KR | 10-2022-0045071 | A | 12 April 2022 | AU | 2015-210884 | A1 | 18 August 2016 |
| | | | | AU | 2021-204761 | B2 | 16 March 2023 |
| | | | | CA | 2938403 | A1 | 06 August 2015 |
| | | | | CN | 106134263 | A | 16 November 2016 |
| | | | | CN | 106134263 | B | 08 November 2019 |
| | | | | CN | 110708753 | A | 17 January 2020 |
| | | | | CN | 110972249 | A | 07 April 2020 |
| | | | | DK | 3100535 | T3 | 27 May 2019 |
| | | | | EP | 3100535 | A1 | 07 December 2016 |
| | | | | EP | 3100535 | B1 | 06 March 2019 |
| | | | | EP | 3509362 | A1 | 10 July 2019 |
| | | | | ES | 2727751 | T3 | 18 October 2019 |
| | | | | JP | 2017-507583 | A | 16 March 2017 |
| | | | | JP | 2019-050605 | A | 28 March 2019 |
| | | | | JP | 2020-191677 | A | 26 November 2020 |
| | | | | JP | 6435339 | B2 | 05 December 2018 |
| | | | | JP | 6751744 | B2 | 09 September 2020 |
| | | | | KR | 10-2016-0114685 | A | 05 October 2016 |
| | | | | KR | 10-2382363 | B1 | 05 April 2022 |
| | | | | MX | 2016009869 | A | 09 January 2017 |
| | | | | MX | 2019009519 | A | 05 November 2019 |
| | | | | PL | 3100535 | T3 | 30 September 2019 |
| | | | | SG | 10201709596 | A | 28 December 2017 |
| | | | | SG | 10202009141 | A | 27 November 2020 |
| | | | | SG | 11201606245 | A | 30 August 2016 |
| | | | | US | 10271288 | B2 | 23 April 2019 |
| | | | | US | 10542499 | B2 | 21 January 2020 |
| | | | | US | 11290961 | B2 | 29 March 2022 |
| | | | | US | 2017-0013565 | A1 | 12 January 2017 |
| | | | | US | 2018-0014255 | A1 | 11 January 2018 |
| | | | | US | 2019-0253978 | A1 | 15 August 2019 |
| | | | | US | 2020-0245257 | A1 | 30 July 2020 |
| | | | | US | 2022-0182947 | A1 | 09 June 2022 |
| | | | | US | 9763199 | B2 | 12 September 2017 |
| | | | | WO | 2015-116866 | A1 | 06 August 2015 |
| KR | 10-2022-0038774 | A | 29 March 2022 | CN | 114175537 | A | 11 March 2022 |
| | | | | EP | 3991330 | A1 | 04 May 2022 |
| | | | | JP | 2022-542997 | A | 07 October 2022 |
| | | | | US | 2021-0037555 | A1 | 04 February 2021 |
| | | | | WO | 2021-020865 | A1 | 04 February 2021 |
| KR | 10-2022-0016047 | A | 08 February 2022 | BR | 112021021906 | A2 | 25 January 2022 |
| | | | | CA | 3138555 | A1 | 05 November 2020 |
| | | | | CN | 113785525 | A | 10 December 2021 |
| | | | | EP | 3963807 | A1 | 09 March 2022 |
| | | | | SG | 11202111950 | A | 29 November 2021 |
| | | | | TW | 202106091 | A | 01 February 2021 |
| | | | | TW | I779281 | B | 01 October 2022 |
| | | | | US | 2022-0217736 | A1 | 07 July 2022 |
| | | | | WO | 2020-223448 | A1 | 05 November 2020 |
| US | 2021-0306120 | A1 | 30 September 2021 | AU | 2017-426874 | A1 | 05 December 2019 |

Form PCT/ISA/210 (patent family annex) (July 2022)

# EP 4 518 542 A1

**INTERNATIONAL SEARCH REPORT**
Information on patent family members

| International application No. |
| --- |
| **PCT/KR2023/005761** |

| Patent document cited in search report | | | Publication date (day/month/year) | Patent family member(s) | | | Publication date (day/month/year) |
| --- | --- | --- | --- | --- | --- | --- | --- |
| | | | | BR | 112019026511 | A2 | 21 July 2020 |
| | | | | CA | 3063502 | A1 | 05 December 2019 |
| | | | | CN | 110999365 | A | 10 April 2020 |
| | | | | CN | 111465110 | A | 28 July 2020 |
| | | | | CN | 111465110 | B | 21 September 2021 |
| | | | | EP | 3634026 | A1 | 08 April 2020 |
| | | | | EP | 3634026 | A4 | 29 July 2020 |
| | | | | EP | 3634026 | B1 | 01 September 2021 |
| | | | | EP | 3910870 | A1 | 17 November 2021 |
| | | | | EP | 3910870 | A4 | 17 November 2021 |
| | | | | IL | 270718 | A | 30 January 2020 |
| | | | | JP | 2020-533827 | A | 19 November 2020 |
| | | | | JP | 7005738 | B2 | 24 January 2022 |
| | | | | KR | 10-2020-0037769 | A | 09 April 2020 |
| | | | | MX | 2019014949 | A | 19 February 2020 |
| | | | | PH | 12019502540 | A1 | 29 June 2020 |
| | | | | RU | 2744209 | C1 | 03 March 2021 |
| | | | | SG | 11201910672 | A | 27 February 2020 |
| | | | | US | 11063710 | B2 | 13 July 2021 |
| | | | | US | 11552749 | B2 | 10 January 2023 |
| | | | | US | 2020-0204308 | A1 | 25 June 2020 |
| | | | | WO | 2019-028771 | A1 | 14 February 2019 |
| | | | | ZA | 201908123 | B | 28 April 2021 |
| US | 2020-0267700 | A1 | 20 August 2020 | CN | 113424653 | A | 21 September 2021 |
| | | | | EP | 3925406 | A2 | 22 December 2021 |
| | | | | KR | 10-2021-0129047 | A | 27 October 2021 |
| | | | | SG | 11202107834 | A | 30 August 2021 |
| | | | | TW | 202041079 | A | 01 November 2020 |
| | | | | US | 11558864 | B2 | 17 January 2023 |
| | | | | WO | 2020-168249 | A2 | 20 August 2020 |
| | | | | WO | 2020-168249 | A3 | 01 October 2020 |

Form PCT/ISA/210 (patent family annex) (July 2022)